(19) **Europäisches Patentamt / European Patent Office / Office européen des brevets**

(11) **EP 4 425 484 A1**

(12) # EUROPEAN PATENT APPLICATION
published in accordance with Art. 153(4) EPC

(43) Date of publication:
**04.09.2024 Bulletin 2024/36**

(21) Application number: **21962147.1**

(22) Date of filing: **26.11.2021**

(51) International Patent Classification (IPC):
***G10L 15/193*** (2013.01)

(86) International application number:
**PCT/CN2021/133434**

(87) International publication number:
**WO 2023/070803 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021 CN 202111274880**

(71) Applicants:
• **University of Science and Technology of China**
**Anhui 230026 (CN)**
• **Iflytek Co., Ltd.**
**Hefei, Anhui 230088 (CN)**

(72) Inventors:
• **LI, Yongchao**
**Hefei, Anhui 230088 (CN)**
• **ZHU, Xiaofei**
**Hefei, Anhui 230088 (CN)**
• **WANG, Zhong**
**Hefei, Anhui 230088 (CN)**
• **FANG, Xin**
**Hefei, Anhui 230088 (CN)**

(74) Representative: **Prinz & Partner mbB**
**Patent- und Rechtsanwälte**
**Rundfunkplatz 2**
**80335 München (DE)**

(54) **SPEECH RECOGNITION METHOD AND APPARATUS, DEVICE, AND STORAGE MEDIUM**

(57) The present application provides a speech recognition method and apparatus, a device, and a storage medium. The method comprises: obtaining an acoustic state sequence of speech to be recognized; constructing a speech recognition decoding network on the basis of a vertical keyword set in a scene to which the speech to be recognized belongs and a sentence pattern decoding network, wherein the sentence pattern decoding network is constructed by performing sentence pattern induction and grammar slot definition processing on a text corpus in the scene to which the speech to be recognized belongs; and decoding the acoustic state sequence by using the speech recognition decoding network so as to obtain a speech recognition result. The speech recognition decoding network is constructed and is used for speech recognition, so that the speech to be recognized can be accurately recognized, especially speech in a specific scene involving vertical keywords can be accurately recognized, and particularly the vertical keywords in the speech can be accurately recognized.

| Obtain an acoustic state sequence of a speech to be recognized | S101 |

↓

| Construct a speech recognition decoding network based on a domain keyword set and a sentence pattern decoding network in a scenario to which the speech to be recognized belongs | S102 |

↓

| Decode the acoustic state sequence by the speech recognition decoding network to obtain a speech recognition result | S103 |

**Figure 1**

## Description

The present application claims priority to Chinese Patent Application No.202111274880.8, titled "SPEECH RECOGNITION METHOD AND APPARATUS, DEVICE, AND STORAGE MEDIUM ", filed on October 29, 2021 with the China National Intellectual Property Administration, which is incorporated herein by reference in its entirety.

## FIELD

The present disclosure relates to the technical field of speech recognition, and in particular to a speech recognition method, apparatus and device, and a storage medium.

## BACKGROUND

With the rapid development of mobile Internet, artificial intelligence and other technologies, a large number of human-computer interaction scenarios have been applied in people's daily life and production process, and speech recognition, as an important interface of human-computer interaction, has become more and more widely used.

The most effective solution for speech recognition at present is to learn massive data by using a neural network technology to obtain a speech recognition model, which is very effective in general scenarios. In theory, when data is sufficient to cover all the vocabularies, a good recognition effect can be achieved with such speech recognition model.

However, in speech recognition scenarios involving domain keywords, such as scenarios of giving a phone call to a mobile phone contact, sending a message to a mobile phone contact, querying city weather condition, and navigation and positioning, the effect of existing speech recognition technology is poor, and a user speech cannot be recognized accurately, especially a domain keyword such as a personal name and a place name in the user speech are usually cannot be successfully recognized.

## SUMMARY

Based on the above conventional technology, a speech recognition method, a speech recognition apparatus, a speech recognition device and a storage medium are provided according to the embodiments of the present disclosure, which can accurately recognize a speech to be recognized, especially a speech in a specific scenario involving domain keywords, and in particular a domain keyword in the speech.

A speech recognition method is provided, which includes:

obtaining an acoustic state sequence of a speech to be recognized;

constructing a speech recognition decoding network based on a domain keyword set and a sentence pattern decoding network that are in a scenario to which the speech to be recognized belongs, where the sentence pattern decoding network is constructed at least by performing sentence pattern induction on a text corpus in the scenario to which the speech to be recognized belongs; and

decoding the acoustic state sequence by the speech recognition decoding network to obtain a speech recognition result.

A speech recognition method is further provided, which includes:

obtaining an acoustic state sequence of a speech to be recognized;

decoding the acoustic state sequence by a speech recognition decoding network to obtain a first speech recognition result, and decoding the acoustic state sequence by a general speech recognition model to obtain a second speech recognition result, where the speech recognition decoding network is constructed based on a domain keyword set and a sentence pattern decoding network that are in a scenario to which the speech to be recognized belongs;

performing an acoustic score incentive on the first speech recognition result; and determining a final speech recognition result at least from the first speech recognition result after the acoustic score incentive and the second speech recognition result.

A speech recognition apparatus is further provided, which includes: an acoustic recognition unit, a network construction unit and a decoding unit. The acoustic recognition unit is configured to obtain an acoustic state sequence of a speech to be recognized. The network construction unit is configured to construct a speech recognition decoding network based on a domain keyword set and a sentence pattern decoding network that are in a scenario to which the speech to be recognized belongs, where the sentence pattern decoding network is constructed at least by performing sentence pattern induction processing on a text corpus in the scenario to which the speech to be recognized belongs. The decoding unit is configured to decode the acoustic state sequence based on the speech recognition decoding network to obtain a speech recognition result.

A speech recognition apparatus is further provided, which includes an acoustic recognition unit, a multi-dimensional decoding unit, an acoustic incentive unit and a decision unit. The acoustic recognition unit is configured to obtain an acoustic state sequence of a speech to be recognized. The multi-dimensional decoding unit is configured to decode the acoustic state sequence by a speech recognition decoding network to obtain a first speech recognition result, and decode the acoustic state sequence by a general speech recognition model to obtain a second speech recognition result, where the speech recognition decoding network is constructed based on a domain keyword set and a sentence pattern decoding network that are in a scenario to which the speech to be recognized belongs. The acoustic incentive unit is configured to perform an acoustic score incentive on the first speech recognition result. The decision unit is configured to determine a final speech recognition result at least from the first speech recognition result after the acoustic score incentive and the second speech recognition result.

A speech recognition device is further provided, which includes a memory and a processor. The memory is connected to the processor and is configured to store a program; and the processor is configured to execute the program stored in the memory to implement the speech recognition method mentioned above.

A storage medium is further provided, including a computer program stored thereon, and the computer program, when run by a processor, performs the speech recognition method mentioned above.

With the speech recognition method according to the embodiment of the present disclosure, a speech recognition decoding network can be constructed based on the domain keyword set in the scenario to which the speech to be recognized belongs and the pre-constructed sentence pattern decoding network in the scenario. In this way, the speech recognition decoding network includes various speech sentence patterns in the scenario to which the speech to be recognized belongs, and also includes various domain keywords in the scenario to which the speech to be recognized belongs. With the speech recognition decoding network, a speech including any sentence pattern and any domain keyword in the scenario to which the speech belongs can be decoded. Therefore, with the constructed the speech recognition decoding network, the speech to be recognized can be accurately recognized, especially a speech in a specific scenario involving domain keywords can be accurately recognized, and especially a domain keyword in the speech can be accurately recognized.

## BRIEF DESCRIPTION OF THE DRAWINGS

For more clearly illustrating the technical solutions in the embodiments of the present disclosure or in the conventional technology, the drawings referred to for describing the embodiments or the conventional technology will be briefly described hereinafter. Apparently, the drawings in the following description are only some examples of the present disclosure, and for those skilled in the art, other drawings may be obtained based on the provided drawings without any creative effort.

Figure 1 is a schematic flowchart of a speech recognition method according to an embodiment of the present disclosure;

Figure 2 is a schematic diagram of a word-level sentence pattern decoding network according to an embodiment of the present disclosure;

Figure 3 is a schematic flowchart of a speech recognition method according to another embodiment of the present disclosure;

Figure 4 is a schematic flowchart of a speech recognition method according to another embodiment of the present disclosure;

Figure 5 is a schematic flowchart of a speech recognition method according to another embodiment of the present disclosure;

Figure 6 is a schematic flowchart of a speech recognition method according to another embodiment of the present disclosure;

Figure 7 is a schematic diagram of a text sentence pattern network according to an embodiment of the present disclosure;

Figure 8 is a schematic diagram of a pronunciation-level sentence pattern decoding network according to an embodiment of the present disclosure;

Figure 9 is a schematic diagram of a word-level personal name network according to an embodiment of the present disclosure;

Figure 10 is a schematic diagram of a pronunciation-level personal name network corresponding to Figure 9 according to an embodiment of the present disclosure;

Figure 11 is a flowchart of a process for correcting a first speech recognition result based on a second speech recognition result according to an embodiment of the present disclosure;

Figure 12 is a flowchart of a process for determining a final speech recognition result from a first speech recognition result and a second speech recognition result according to an embodiment of the present disclosure;

Figure 13 is a schematic diagram of a state network of a speech recognition result according to an embodiment of the present disclosure;

Figure 14 is a schematic diagram of a state network after path expansion is performed on the speech recognition result shown in Figure 13;

Figure 15 is a schematic structural diagram of a speech recognition apparatus according to an embodiment of the present disclosure;

Figure 16 is a schematic structural diagram of a speech recognition apparatus according to another embodiment of the present disclosure; and

Figure 17 is a schematic structural diagram of a speech recognition device according to an embodiment of the present disclosure.

## DETAILED DESCRIPTION

The technical solution according to the embodiments of the present disclosure is applicable to speech recognition application scenarios. By adopting the technical solution according to the embodiments of the present disclosure, the speech content can be recognized more accurately. Especially in a specific service scenario involving domain keywords, the speech content, especially the domain keyword in the speech, can be recognized accurately, thus the speech recognition effect is improved.

The above domain keyword generally refers to different keywords belonging to the same type. For example, a person name, a place name, an application name, and other names constitute different domain keywords respectively. Specifically, for example, different names in user's address book form a name domain keyword, different place names within the region where the user is located form a place name domain keyword, and the names of various applications installed on the user terminal form an application name domain keyword.

The above service scenarios involving domain keywords refer to service scenarios that contain a domain keyword in an interactive voice, such as voice dialing, voice navigation and other service scenarios. A user is required to speak out the name for calling or the place name for navigation, for example, the user may say "call XX" or "navigate to YY", where "XX" may be any name in the user's mobile phone address book, and "YY" may be a certain place name in the user's area. It can be seen that the speeches in these service scenarios contain domain keywords (such as a person name or a place name), so these service scenarios are service scenarios involving domain keywords.

With the popularity of artificial intelligence and smart terminals, human-computer interaction scenarios are becoming more and more common, and speech recognition is an important interface for human-computer interaction. For example, many manufacturers have built-in voice assistants in terminal operating systems of smart terminals, so that a user can control a terminal through voice. For example, a user can call or send text messages to a contact in the address book through voice, query the city weather condition through voice, or open or close a terminal application through voice, etc. These interaction scenarios belong to specific service scenarios compared to common speech recognition service scenarios, and most of the voices in these scenarios are voices involving domain keywords (such as a personal name in the address book, a place name, and a terminal application name).

Compared with ordinary text keywords, domain keywords have the features of frequent changes, unpredictability, and user-definable, and the proportion of domain keywords in the massive speech recognition training corpus is extremely low, making the conventional speech recognition solution that trains a speech recognition model by using massive corpus be incapable of performing speech recognition services involving domain keywords.

For example, compared with a conventional text corpus, an occurrence rate of a personal name is low, even in the massive training corpus, a personal name is rare, which makes a model be unable to completely learn the characteristics of personal names through the massive corpus. Moreover, the personal name belongs to user-defined text content, which is inexhaustible and unpredictable. It is unrealistic to completely generate all the personal names artificially. Furthermore, a contact name in the address book may not be stored as a standardized name by the user, but may be a nickname or code name, etc., and the user may even modify, add or delete contacts in the address book at any time, therefore, names in the address book from different users are highly diverse, and it is impossible to make the speech recognition model learn features of all the names in a unified way.

Therefore, the conventional technical solution of training a speech recognition model through massive corpus and using the speech recognition model to realize the speech recognition function is not fully competent for speech recognition in service scenarios involving domain keywords. Especially domain keywords in speeches are not recognized successfully, resulting in serious effect to the user experience.

In view of the above conventional technology, a speech recognition method is provided according to an embodiment of the present disclosure, which can improve the speech recognition effect, especially the speech recognition effect in service scenarios involving domain keywords.

Technical solutions of embodiments of the present disclosure are clearly and completely described hereinafter in conjunction with the drawings of the embodiments of the present disclosure. Apparently, the embodiments described in the following are only some embodiments of the present disclosure, rather than all embodiments. Any other embodiments obtained by those skilled in the art based on the embodiments in the present disclosure without any creative work fall in the scope of protection of the present disclosure.

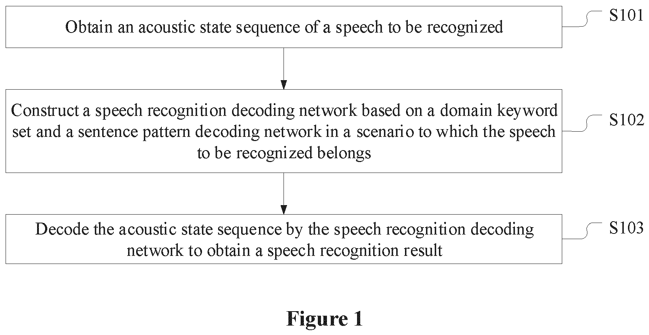

A speech recognition method is provided according to an embodiment of the present disclosure, as shown in Figure 1, the method includes steps S101 to S103.

In step S101, an acoustic state sequence of a speech to be recognized is obtained.

Specifically, based on the application scenarios applicable to the technical solutions according to the embodiments of the present disclosure described above, the speech to be recognized refers to speech data in a service scenario involving domain keywords. The speech to be recognized includes speech content of a domain keyword.

Processing such as endpoint detection, windowing and framing, and feature extraction is performed on the speech to be recognized to obtain an audio feature of the speech. The audio feature may be Mel-Frequency Cepstral Coefficients (MFCCs), or audio features of any other types.

After the audio feature of the speech to be recognized is obtained, the audio feature is inputted into an acoustic model for acoustic recognition, and an acoustic state posterior score of each frame of audio is obtained, that is, the acoustic state sequence is obtained. The acoustic model is mainly a neural network structure, which identifies the acoustic state corresponding to each frame of audio and its posterior score through forward calculation. The above acoustic state corresponding to the audio frame is specifically a pronunciation unit corresponding to the audio frame, such as a phoneme or a phoneme sequence corresponding to the audio frame.

The conventional speech recognition technical solution applies an architecture including an acoustic model and a language model, that is, firstly, the speech to be recognized is recognized acoustically through the acoustic model to realize mapping of a speech feature to a phoneme sequence; then, the phoneme sequence is recognized through the language model to realize mapping of the phoneme to a text.

According to the conventional speech recognition solution, the acoustic state sequence of the speech to be recognized obtained through the above acoustic recognition is inputted into the language model for decoding, so as to determine a text content corresponding to the speech to be recognized. The language model is trained based on massive training corpus and can realize the mapping of the phoneme to a text.

Different from conventional speech recognition solutions, in the embodiment of the present disclosure, the acoustic state sequence is decoded not using the speech model trained based on massive corpus, but using a decoding network constructed in real time, and details are described as follows.

In step S 102, a speech recognition decoding network is constructed based on a domain keyword set and a sentence pattern decoding network that are in a scenario to which the speech to be recognized belongs.

Specifically, different from the conventional language model, in the embodiment of the present disclosure, in order to recognize a speech in a service scenario including a domain keyword, a speech recognition decoding network is constructed in real time to decode the acoustic state sequence of the speech to be recognized, and obtain a speech recognition result.

The speech recognition decoding network is constructed based on a domain keyword set in the scenario to which the speech to be recognized belongs, and a pre-constructed sentence pattern decoding network in the scenario to which the speech to be recognized belongs.

The sentence pattern decoding network in the scenario to which the speech to be recognized belongs is constructed at least by performing sentence pattern induction on the text corpus in the scenario to which the speech to be recognized belongs.

The scenario to which the speech to be recognized belongs specifically refers to a service scenario to which the speech to be recognized belongs. For example, if the speech to be recognized is "I want to give XX a call", the speech to be recognized belongs to the phone call service, the scenario to which the speech to be recognized belongs is a phone call scenario. For example, if the speech to be recognized is "Navigate to XX", the speech to be recognized belongs to a navigation service, the scenario to which the speech to be recognized belongs is a navigation scenario.

Through research, it has been found that in service scenarios involving domain keywords, a considerable part of the sentence patterns of the user speeches is fixed. For example, in a phone call scenario or a message sending scenario, a common used sentence pattern for the user is "I want to give XX a call" or "send a message to XX for me"; in a voice navigation scenario, a common used sentence pattern for the user is usually "go to XX (place name)" or "navigate to XX (place name)".

Therefore, in a specific service scenario involving domain keywords, the sentence patterns of the user speech are regular, or exhaustive. By induction of these sentence patterns, a sentence pattern network corresponding to the scenario may be obtained, which is named as a sentence decoding network in the embodiment of the present disclosure. It may be understood that the sentence pattern decoding network constructed in the above way contains sentence pattern information corresponding to the scenario. The sentence pattern decoding network obtained by induction of the text corpus of all sentence patterns in a certain scenario contains all sentence patterns in the scenario.

In a preferred embodiment, the sentence pattern decoding network according to the embodiment of the present disclosure is constructed by performing sentence induction and grammar slot definition on the text corpus in the scenario to which the speech to be recognized belongs.

The defining a grammar slot in a sentence pattern specifically refers to determining a grammatical type of a text slot in the sentence pattern. In the embodiment of the present disclosure, the text slots in the text sentence are classified into ordinary grammar slots and replaceable grammar slots. A text slot in the text sentence where a non-domain keyword is located is defined as an ordinary grammar slot, and a text slot in the text sentence where a domain keyword is located is defined as a replaceable grammar slot.

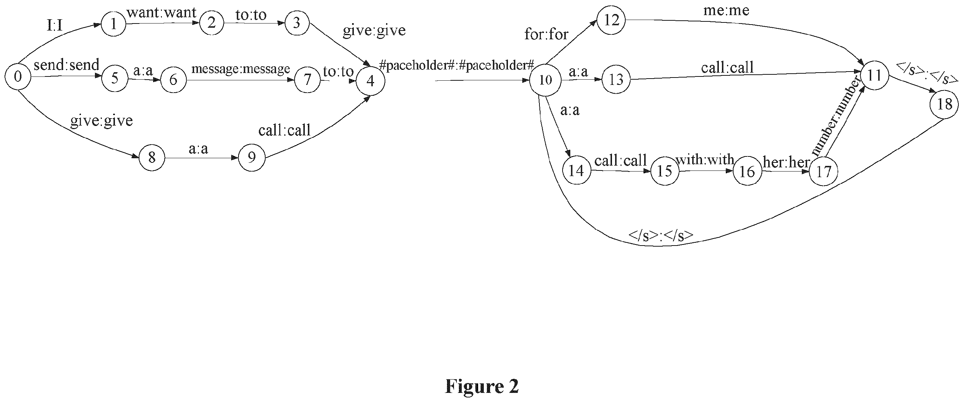

For example, in a scenario of making a phone call or sending a text message, the sentence pattern decoding network shown in Figure 2 may be obtained by performing sentence induction and grammar slot definition on the text corpus "I want to give XX a call" or "send a message to XX for me". The sentence pattern decoding network includes nodes and directed arcs connecting the nodes, where the directed arc corresponds to the ordinary grammar slot and replaceable grammar slot, and the directed arc has label information for recording a text content in the slot. Specifically, an entry in the ordinary grammar slot is segmented and connected in series through nodes and directed arcs. The directed arc between two nodes is labeled with word information, and the left and right of a colon represent input information and output information respectively. It is assumed that the input information and output information are the same here. Multiple words after word segmentation of a single entry are connected in series, different entries of the same grammar slot are connected in parallel, a placeholder "#placeholder#" is used for a replaceable grammar slot, no expansion is performed, and the nodes are numbered in order, where words with the same start node identifier share the same start node, and words with the same end node identifier share the same end node. Figure 2 illustrates a simple word-level sentence pattern decoding network diagram of an address book. The ordinary grammar slot before the replaceable grammar slot contains three entries: "I want to give", "send a message to" and "give a call". The ordinary grammar slot after the replaceable grammar slot contains three entries: "for me", "a call" and "a call with her number". The connection between a node 10 and a node 18 indicates moving directly from node 10 to the end node, and "</s>" on the arc represents silence.

For a specific process of constructing the sentence pattern decoding network, reference is made to the detailed description in the following embodiments.

The domain keyword set in the service scenario to which the speech to be recognized belongs refers to a set including all domain keywords in the service scenario to which the speech to be recognized belongs. For example, in a case that the speech to be recognized is a speech in the scenario of a voice call or voice text message, the domain keyword set in the service scenario to which the speech to be recognized belongs may specifically be a personal name set including personal names in the user's address book; in a case that the speech to be recognized is a speech in the voice navigation scenario, the domain keyword set in the service scenario to which the speech to be recognized belongs may specifically be a place name set including various place names in a region where the user is located.

The speech recognition decoding network may be obtained by adding a domain keyword in the domain keyword set under the service scenario to which the speech to be recognized belongs to the replaceable grammar slot of the sentence pattern decoding network. It can be seen that the decoding network not only includes all the speech sentences in the service scenario to which the speech to be recognized belongs, but also includes all the domain keywords in the scenario, then the speech recognition decoding network can recognize the speech sentence patterns in the service scenario to which the speech to be recognized belongs, and can recognize the domain keywords in the speech, that is, can recognize the speech in the service scenario.

The specific process of constructing the speech recognition decoding network will be described in detail in following embodiments.

It should be noted that, in a preferred embodiment of the present disclosure, the speech recognition decoding network is specifically constructed on a server, that is, the domain keyword set in the service scenario to which the speech to be recognized belongs is transmitted to a cloud server. The cloud server constructs a speech recognition decoding network based on the domain keyword set and a pre-constructed sentence pattern decoding network in the service scenario to which the speech to be recognized belongs.

For example, in a case that a user inputs a command "I want to give XX a call" to a mobile terminal, the mobile terminal transmits a local address book (that is, a domain keyword set of personal names) to the cloud server, and the cloud server constructs the speech recognition decoding network based on the personal names in the address book and the sentence pattern decoding network in the phone call scenario. Then, the speech recognition decoding network includes various sentence patterns for making a call, and also includes the personal names in the address book. By using the speech recognition decoding network, a speech of the user for calling to any member in the current address book can be recognized.

In a conventional technical solution, the speech recognition decoding network is constructed locally at the user terminal, and is constructed not in real time, but is repeatedly invoked after being constructed. Due to low computing resources of the terminal device, the network construction speed is slow and the network decoding speed is limited. Moreover, the decoding network constructed not in real-time cannot be updated in time when the domain keyword set is updated, affecting the speech recognition effect.

However, in the embodiment of the present disclosure, the speech recognition decoding network is constructed on the cloud server. In the speech recognition process, the domain keyword set is transmitted in real time by performing step S 102, to construct the speech recognition decoding network. In this way, it is ensured that the constructed speech recognition decoding network includes the latest domain keyword set, that is, the domain keyword set required for this recognition, so that the domain keyword can be accurately recognized. In addition, depending on the powerful computing power of the cloud server, the speech recognition decoding network has stronger decoding performance.

Moreover, depending on the centralized processing capability of the cloud server, it is unnecessary to construct a speech recognition decoding network for each terminal but only on the cloud server. For any terminal connected to the cloud server, as long as the terminal transmits the information of the speech to be recognized and the domain keyword set in the service scenario to which the speech to be recognized belongs (such as an address book stored locally on the terminal) to the cloud server, the cloud server can construct a suitable speech recognition decoding network for the speech to be recognized, and decode the speech to be recognized.

In step S103, the acoustic state sequence is decoded by the speech recognition decoding network to obtain a speech recognition result.

From the above description, it can be seen that the speech recognition decoding network constructed above includes sentence patterns in the service scenario to which the speech to be recognized belongs, and a domain keyword set in the service scenario to which the speech to be recognized belongs. Then, a speech content of the speech to be recognized can be recognized by using the speech recognition decoding network.

For example, in a case that the user terminal collects a speech signal of calling someone in an address book of the terminal from the user, in order to recognize the speech, according to the above step S102, a speech recognition decoding network including names of the local address book is constructed based on the local address book (this address book is used as the domain keyword set) of the terminal and a pre-constructed sentence pattern decoding network corresponding to the phone call service scenario. For details, reference is made to the speech recognition decoding network architecture shown in Figure 2. This speech recognition decoding network includes all speech sentence patterns in the phone call scenario and all names in the local address book. In theory, when the user calls any person in the address book of the terminal through the speech control terminal, the sentences spoken by the user are included in the speech recognition decoding network.

Exemplarily, the speech recognition decoding network includes multiple same or different sentence pattern paths including different domain keywords. When an acoustic state sequence matches pronunciation of one or several sentence pattern paths in the speech recognition decoding network, it may be determined that a text content of the acoustic state sequence is a text content of the sentence pattern path. Therefore, the finally speech recognition result obtained by decoding may be a text of one or several paths in the speech recognition decoding network, that is, the number of the final speech recognition result may be one or more.

For example, in a case that a user speech collected by a terminal is "I want to give John a call", after performing acoustic recognition on the speech to obtain an acoustic state sequence, a speech recognition decoding network is constructed by using an address book of the terminal, the speech recognition decoding network includes the sentence pattern "I want to give XX a call" and the name "John". In addition, the speech recognition decoding network also includes other sentence patterns and other names. Based on the speech recognition decoding network, the acoustic state sequence of the speech is compared with the pronunciation of each path in the speech recognition decoding network, and it is determined that the acoustic state sequence matches the pronunciation of the path "I want to give John a call", and a speech recognition result "I want to give John a call" may be obtained, that is, the user speech is recognized.

It can be seen from the above that with the speech recognition method according to the embodiment of the present disclosure, a speech recognition decoding network can be constructed based on the domain keyword set in the service scenario to which the speech to be recognized belongs and the pre-constructed sentence pattern decoding network in the service scenario. Then, the speech recognition decoding network includes various speech sentence patterns in the service scenario to which the speech to be recognized belongs, and also includes various domain keywords in the service scenario to which the speech to be recognized belongs. The speech recognition decoding network can decode a speech to be recognized including any sentence pattern and any domain keyword in the service scenario to which the speech belongs. Therefore, with the above constructed speech recognition decoding network, the speech to be recognized can be accurately recognized, especially the speech in a specific scenario involving domain keywords can be accurately recognized, and especially the domain keyword in the speech can be accurately recognized.

In a preferred embodiment, in a case that the acoustic state sequence of the speech to be recognized is decoded by using the above speech recognition decoding network, the acoustic state sequence of the speech to be recognized is also decoded by using a general speech recognition model.

In order to distinct, a result obtained by decoding the acoustic state sequence of the speech to be recognized using the speech recognition decoding network is referred to as a first speech recognition result, and a result obtained by decoding the acoustic state sequence of the speech to be recognized using the general speech recognition model is referred to as a second speech recognition result.

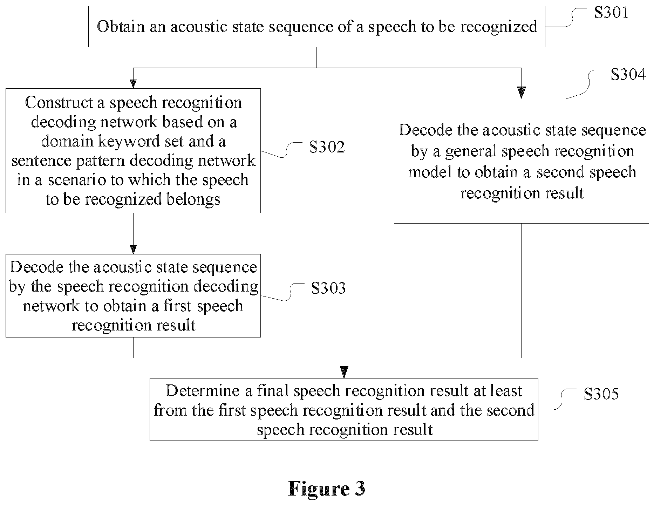

As shown in Figure 3, after obtaining the acoustic state sequence of the speech to be recognized in step S301, step S302 and step S303 are performed to construct a speech recognition decoding network, and the acoustic state sequence is decoded by the speech recognition decoding network to obtain a first speech recognition result; and step S304 is performed to decode the acoustic state sequence by a general speech recognition model to obtain a second speech recognition result.

The number of each of the first speech recognition result and second speech recognition result may be one or more. In order to ensure the effect of speech recognition, for each model, there are at most 5 speech recognition results reserved to participate in the determination of the final speech recognition result.

The general speech recognition model is a conventional speech recognition model obtained through massive corpus training, which recognizes a text content corresponding to the speech by learning features of the speech, rather than having a standardized sentence pattern like the speech recognition decoding network. Therefore, the general speech recognition model can recognize the sentence patterns flexibly. By decoding the acoustic state sequence of the speech to be recognized with the general speech recognition model, the content of the speech to be recognized can be recognized flexibly without being limited by the sentence pattern of the speech to be recognized.

If the speech to be recognized does not have a certain sentence pattern in the speech recognition decoding network, such speech cannot be correctly decoded by the speech recognition decoding network, or the first speech recognition result obtained is inaccurate. However, with the general speech recognition model, the speech to be recognized can still be recognized and decoded to obtain a second speech recognition result.

After the first speech recognition result and the second speech recognition result are obtained, step S305 is performed to determine a final speech recognition result at least from the first speech recognition result and the second speech recognition result.

In an exemplary embodiment, in a case that the first speech recognition result and the second speech recognition result are obtained, acoustic scores of the first speech recognition result and the second speech recognition result are compared, and one or more of the first speech recognition result and the second speech recognition result with the highest acoustic score are selected as the final speech recognition result.

The acoustic scores of the first speech recognition result and the second speech recognition result each refers to a score of an entire decoding result determined according to decoding scores of each acoustic state sequence element when decoding the acoustic state sequence of the speech to be recognized. For example, a sum of the decoding scores of each acoustic state sequence element may be used as the score of the entire decoding result. The decoding score of an acoustic state sequence element refers to a probability score of an acoustic state sequence element (such as a phoneme or phoneme unit) being decoded into a certain text, so the score of the entire decoding result is a probability score of the entire acoustic state sequence being decoded into a certain text. The acoustic score of the speech recognition result reflects a score that a speech is recognized to obtain the speech recognition result, which can be used to indicate the accuracy of the speech recognition result.

Therefore, the accuracy of each recognition result can be reflected according to the acoustic score of one or more first speech recognition results and the acoustic score of one or more second speech recognition results; one or more speech recognition results with the highest score are selected from these recognition results by comparing the acoustic scores, as the final speech recognition result.

Steps S301 to S303 in the method embodiment shown in Figure 3 respectively correspond to steps S101 to S103 in the method embodiment shown in Figure 1. Details may be referred to the description of the method embodiment corresponding to Figure 1.

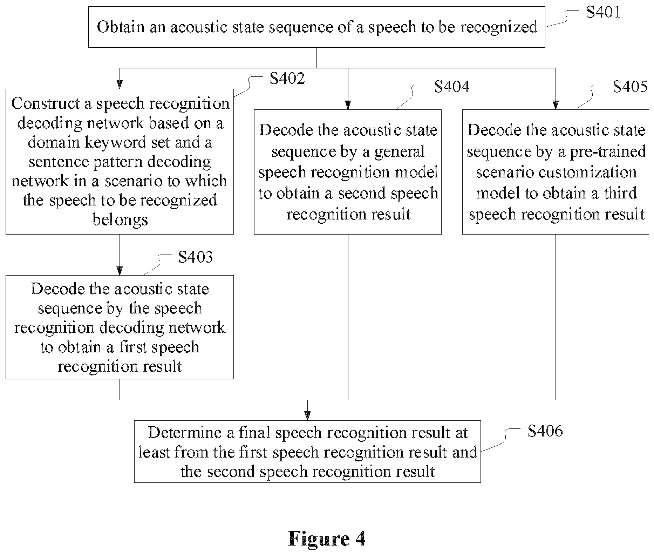

Furthermore, Figure 4 shows a schematic flowchart of a speech recognition method according to another embodiment of the present disclosure.

Different from the speech recognition method in Figure 3, as shown in Figure 4, in the speech recognition method according to the embodiment of the present disclosure, in addition to decoding the acoustic state sequence of the speech to be recognized by using the constructed speech recognition decoding network and the general speech recognition model to obtain the first speech recognition result and the second speech recognition result, step S405 is further performed to decode the acoustic state sequence through a pre-trained scenario customization model to obtain a third speech recognition result.

After obtaining the first speech recognition result, the second speech recognition result and the third speech recognition result, step S406 is performed to determine the final speech recognition result from the first speech recognition result, the second speech recognition result and the third speech recognition result.

The scenario customization model refers to a speech recognition model obtained by performing speech recognition training on the speech in the scenario to which the speech to be recognized belongs. The scenario customization model has the same model architecture as the general speech recognition model. The difference between the scenario customization model and the general speech recognition model is that the scenario customization model is not obtained by training with massive general corpus, but by training with the corpus in the scenario to which the speech to be recognized belongs. Therefore, compared with the general speech recognition model, the scenario customization model has a higher sensitivity and higher recognition rate for the speech in the service scenario to which the speech to be recognized belongs. Compared with the general speech recognition model, the scenario customization model can more accurately recognize a speech in a specific service scenario, without being limited to predetermined sentence patterns like the speech recognition decoding network mentioned above.

Therefore, on the basis of the speech recognition decoding network and the general speech recognition model, a scenario customization model is added, so that the three models can decode the acoustic state sequence of the speech to be recognized separately, to recognize the speech to be recognized more comprehensively and deeply in multiple ways.

For the speech recognition results outputted by the three models, reference may be made to the description of the above step S305 as an example. By comparing the acoustic scores of the first speech recognition result, the second speech recognition result and the third speech recognition result, one or more speech recognition results with the highest or higher acoustic scores are selected as the final speech recognition result.

Steps S401 to S404 in the method embodiment shown in Figure 4 correspond to steps S301 to S304 in the method embodiment shown in Figure 3 respectively. Details may be referred to the description of the method embodiment corresponding to Figure 3, which are not repeated here.

The main idea of the speech recognition method based on multi-model decoding is to perform decoding through multiple models, and select a final recognition result from multiple recognition results by comparing the acoustic scores. In practice, it is found that when the first speech recognition result outputted by the speech recognition decoding network has a similar acoustic score as the second speech recognition result outputted by the general speech recognition model or the third speech recognition result outputted by the scenario customization model, the first speech recognition result is often dismissed when compared with the second speech recognition result or the third speech recognition result.

In fact, when the scores of the speech recognition results outputted by the three models are similar, the sentence patterns of the speech recognition results are basically the same except that there are differences in the domain keyword. The first speech recognition result includes more accurate domain keyword information, if the first speech recognition result is dismissed, inaccurate recognition of the domain keyword may be caused. Therefore, when the scores of the recognition results outputted by the models are similar, the recognition result including an accurate domain keyword should win.

However, the first speech recognition result is impossible to win according to the descriptions of the above embodiments.

In view of the above situation, before comparison among the speech recognition results, incentive may be performed to make the score of the slot where the domain keyword in the first speech recognition result is located to be increased by a percentage, that is, acoustic score incentive is performed to the first speech recognition result. In this way, when sentence patterns outputted by different models are the same, the first speech recognition result wins.

The above description only summarizes the idea and necessity of the acoustic score incentive. For the specific processing of the acoustic score incentive, reference is made to the description of the following embodiments.

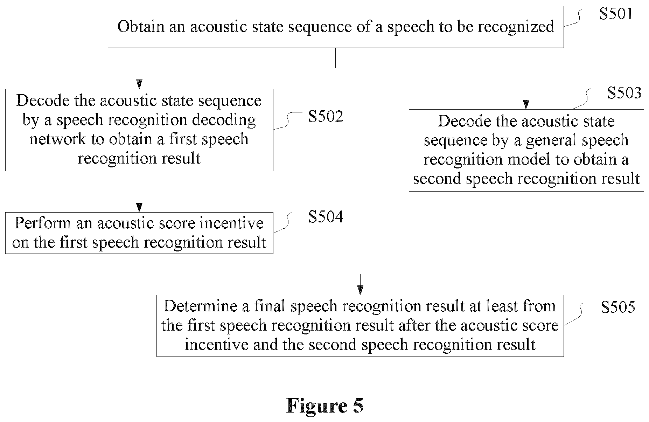

Based on the idea of the acoustic score incentive, a speech recognition method is provided according to another embodiment of the present disclosure, as shown in Figure 5, the method includes steps S501 to S505.

In step S501, an acoustic state sequence of a speech to be recognized is obtained.

In step S502, the acoustic state sequence is decoded by the speech recognition decoding network to obtain a first speech recognition result. In step S503, the acoustic state sequence is decoded by the general speech recognition model to obtain a second speech recognition result. The speech recognition decoding network is constructed based on a domain keyword set and a sentence pattern decoding network in the scenario to which the speech to be recognized belongs.

In step S504, an acoustic score incentive is performed on the first speech recognition result.

In step S505, a final speech recognition result is determined at least from the first speech recognition result after incentive and the second speech recognition result.

Specifically, for specific processing of the steps S501, S502, S503 and S505, reference may be made to the corresponding description of the speech recognition method embodiment corresponding to Figure 1 to Figure 4, which is not repeated here.

The speech recognition decoding network is constructed based on a domain keyword set in the scenario to which the speech to be recognized belongs, and a sentence pattern decoding network obtained by performing sentence induction and grammar slot definition on the text corpus in the scenario to which the speech to be recognized belongs. For specific content of the speech recognition decoding network, reference is made to the description of the embodiments, and for the process of constructing the network, reference is made to the specific description of the following embodiments.

Different from the speech recognition method described in the embodiments, in the speech recognition method according to the embodiment of the present disclosure, before comparing the acoustic scores of the first speech recognition result and the second speech recognition result to determine the final speech recognition result, the acoustic score incentive is first performed on the first speech recognition result according to the embodiment of the present disclosure.

Specifically, performing the acoustic score incentive on the first speech recognition result specifically includes performing incentive on an acoustic score of a slot where the domain keyword in the first speech recognition result is located, that is, the acoustic score of the slot where the domain keyword in the first speech recognition result is located is scaled according to an incentive coefficient. The incentive coefficient is determined by the service scenario and the actual situation of the speech recognition result. For the specific content of acoustic score incentive, reference is made to the following embodiments of specifically describing the acoustic score incentive.

Through the acoustic score incentive, in a case that the scores of the first speech recognition result and the second speech recognition result are similar, that is, in a case that the sentence patterns are the same, the acoustic score of the first speech recognition result can be higher than that of the second speech recognition result, so that the first speech recognition result wins when comparing the acoustic scores. Therefore, in a case that the scores of the first speech recognition result and the second speech recognition result are similar, it can be ensured that the domain keyword in the final speech recognition result is more accurate.

It can be seen that with the speech recognition method according to the embodiment of the present disclosure, a speech recognition decoding network can be constructed based on the domain keyword set in the service scenario to which the speech to be recognized belongs and the pre-constructed sentence pattern decoding network in the service scenario. The speech recognition decoding network can decode speech including any sentence pattern and any domain keyword in the service scenario to which the speech to be recognized belongs. Therefore, the speech recognition decoding network can accurately recognize a speech to be recognized, especially a speech in a specific scenario involving domain keywords, and especially the domain keywords in the speech.

In addition, with the speech recognition method according to the embodiment of the present disclosure, in addition to using the speech recognition decoding network to perform decoding and recognition, a general speech recognition model is further used to perform decoding and recognition. The general speech recognition model has higher sentence flexibility than the speech recognition decoding network. By decoding the acoustic state sequence of the speech to be recognized separately with multiple models, the speech to be recognized can be recognized more comprehensively and deeply in multiple ways.

In addition, in a case of multi-model decoding and recognition, the acoustic score incentive is performed on the speech recognition result outputted by the speech recognition decoding network according to the embodiment of the present disclosure. Compared with the general speech recognition model, the speech recognition decoding network has a higher recognition accuracy for domain keywords. Therefore, based on the acoustic score incentive process, in a case that scores of the speech recognition result outputted by the speech recognition decoding network and the speech recognition result outputted by the general speech recognition model are similar, the speech recognition result outputted by the speech recognition decoding network wins, thereby ensuring that the domain keyword in the final speech recognition result is recognized accurately.

In a preferred embodiment, a speech recognition method is further provided according to another embodiment of the present disclosure. Compared with the speech recognition method shown in Figure 5, a scenario customization model is added in this method to decode the acoustic state sequence of the speech to be recognized.

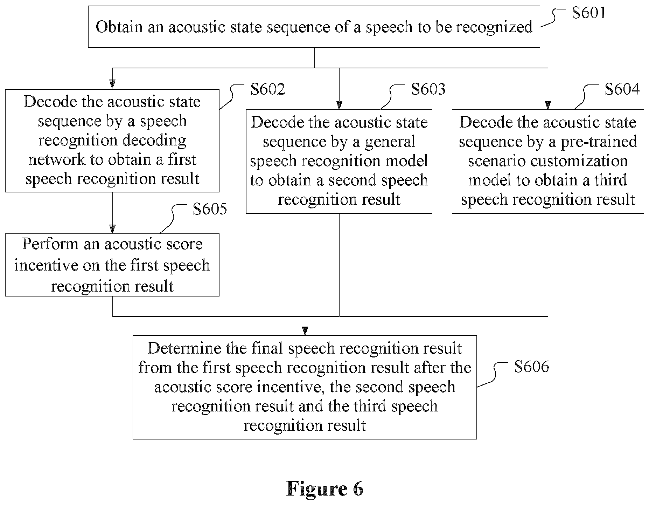

As shown in Figure 6, in addition to performing step S602 to decode the acoustic state sequence by the speech recognition decoding network to obtain the first speech recognition result, and step S603 to decode the acoustic state sequence by the general speech recognition model to obtain the second speech recognition result, step S604 is further performed to decode the acoustic state sequence by the pre-trained scenario customization model to obtain a third speech recognition result.

The scenario customization model is obtained by performing speech recognition training on a speech in the scenario to which the speech to be recognized belongs.

Specifically, for the functions of the scenario customization model and the beneficial effects brought by the scenario customization model, reference may be made to the embodiment corresponding to the speech recognition method shown in Figure 4, which is not repeated here.

Finally, step S606 is performed to determine the final speech recognition result from the first speech recognition result after incentive, the second speech recognition result and the third speech recognition result.

Exemplarily, as described in the above embodiments, by comparing the acoustic scores of the first speech recognition result, the second speech recognition result and the third speech recognition result, one or more speech recognition results with higher or highest acoustic scores can be selected as the final speech recognition result. For the specific processing process, reference is made to the description of the embodiments.

For the specific content of steps S601, S602, S603 and S605 in Figure 6, reference is made to the specific processing content of the corresponding steps in the above embodiments, which is not repeated here.

The speech recognition methods mentioned above are performed completely based on the acoustic score of the speech recognition result when comparing and selecting from multiple speech recognition results, which completely ignores the influence of the language model on the recognition effect, especially in the speech recognition decoding network or scenario customization model. This simple and direct comparing way greatly affects the recognition effect, and will cause in severe cases, false triggering problems, affecting the user experience.

In view of this, on the basis of the acoustic score comparison, a language model incentive is performed on the speech recognition result according to the embodiment of the present disclosure, so that language model information is incorporated into the speech recognition result, and a final speech recognition result is determined through language score comparison.

In a method of determining the speech recognition result, referring to the description of the above embodiments, the first speech recognition result, the second speech recognition result and the third speech recognition result are obtained respectively through the speech recognition decoding network, the general speech recognition model, and the scenario customization model, and a the acoustic score incentive is performed on the first speech recognition result. The process of determining the final speech recognition result from the first speech recognition result after incentive, the second speech recognition result and the third speech recognition result may be performed as follows.

Firstly, according to the acoustic score of the first speech recognition result after acoustic score incentive and the acoustic score of the second speech recognition result, a candidate speech recognition result is determined from the first speech recognition result and the second speech recognition result.

Specifically, this step is the same as the process of comparing the acoustic scores described above. By comparing the acoustic scores of the first speech recognition result after acoustic incentive and the second speech recognition result, one or more speech recognition results with the highest acoustic score are selected as the candidate speech recognition result.

Secondly, the language model incentive is performed on the candidate speech recognition result and the third speech recognition result respectively.

Specifically, the language model incentive refers to comparing the speech recognition result with the domain keyword in the scenario to which the speech to be recognized belongs. If the speech recognition result matches the domain keyword, a path expansion is performed on the speech recognition result, and the expanded speech recognition result is re-scored based on the clustering language model, and the language model incentive performed on the speech recognition result is completed. The specific processing process of the language model incentive is specially described in the following embodiments.

Finally, based on the language score of the candidate speech recognition result after language model incentive, and the language score of the third speech recognition result after language model incentive, the final speech recognition result is determined from the candidate speech recognition result and the third speech recognition result.

Specifically, referring to the strategy of acoustic score comparing, the language scores are compared between the candidate speech recognition result after language model incentive and the third speech recognition result, and one or more speech recognition results with the highest language scores are selected as the final speech recognition result. For the specific processing process of the language score comparing, reference is made to the processing process of the acoustic score comparing described in the embodiments, which is not described in detail here.

The order of performing the above steps of acoustic score incentive, language model incentive, and selecting a candidate speech recognition result may be flexibly adjusted without affecting the realization of the entire function.

For example, in a method of determining a speech recognition result, reference is made to the description of the embodiments. After obtaining the first speech recognition result, the second speech recognition result and the third speech recognition result respectively from the speech recognition decoding network, the general speech recognition model and the scenario customization model, the language model incentive is performed on the first speech recognition result, the second speech recognition result and the third speech recognition result; then, the language scores of the first speech recognition result after the language model incentive, the second speech recognition result after the language model incentive and the third speech recognition result after the language model incentive are compared with each other, and the final speech recognition result is determined from the first speech recognition result, the second speech recognition result and the third speech recognition result.

In the following, the processing steps in each speech recognition method in the above embodiments are described in detail in the following embodiments. It should be understood that, since the above speech recognition methods have overlapping or identical processing steps with each other, the specific implementation manners of the processing steps described in the following embodiments are respectively applicable to the corresponding or related processing steps of the speech recognition method described in the above embodiments.

First, the process of constructing the sentence pattern decoding network used to construct the speech recognition decoding network in the above embodiments of the speech recognition method is described in the present disclosure. The process of constructing the sentence pattern decoding network described below is only an exemplary and preferred implementation solution. In practice, the sentence pattern decoding network may be constructed in other ways with reference to the function of the sentence pattern decoding network embodied in this embodiment in order to implement the technical solution in the embodiment of the present disclosure.

The sentence pattern decoding network in the service scenario to which the speech to be recognized belongs described in the above embodiments may be constructed by performing the following steps A1 to A3.

In step A1, a text sentence network is constructed by performing sentence pattern induction and grammar slot definition on corpus data in a scenario to which a speech to be recognized belongs.

The corpus data in the service scenario to which the speech to be recognized belongs is annotated data of the speech collected from an actual service scenario. For example, in a scenario of voice phone calling or message sending of a user, a commanding voice of the user for the phone calling or message sending is collected and marked as the corpus data in the scenario of phone calling or message sending. Alternatively, corpus data that conforms to grammatical logic and service scenarios may be obtained by artificially expansion based on experience. For example, "I want to give John a call" and "send a message to Peter for me" are two examples of the corpus data. Since the subsequent sentence induction and grammar slot definition are directly based on the corpus, the corpus collected at this stage should have a high coverage, but there is no requirement for the coverage of domain keyword.

As mentioned above, in a specific service scenario involving domain keywords, the sentence patterns of the user's speech are usually regular, or exhaustive. By summarizing these sentence patterns and classifying and defining the grammar slots, a sentence network corresponding to the service scenario may be obtained, which is referred to as a text sentence network in the embodiment of the present disclosure.

The defining the grammar slot in the sentence pattern specifically includes determining a grammatical type of a text slot in the sentence pattern. In the embodiment of the present disclosure, the text slots in the text sentence are classified into ordinary grammar slots and replaceable grammar slots, where a text slot corresponding to a non-domain keyword is defined as an ordinary grammar slot, and a text slot corresponding to a domain keyword is defined as a replaceable grammar slot. The ordinary grammar slot stores a non-domain keyword in a text sentence is stored, and the replaceable grammar slot stores a placeholder corresponding to the domain keyword. Depending on positions of text slots corresponding to domain keywords in the text, the number of ordinary grammar slot may be one or more, and each text slot corresponding to domain keywords corresponds to a replaceable grammar slot.

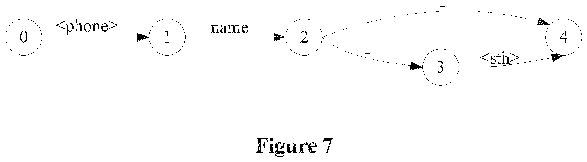

The text sentence pattern network constructed according to the above method includes network nodes and directed arcs for connecting the nodes, and the text sentence pattern network is defined based on Augmented Backus-Naur Form (ABNF). Specifically, as shown in Figure 7, the directed arc of the text sentence pattern network carries label information, and the label information indicates a placeholder of the replaceable grammar slot corresponding to the directed arc or a text of the ordinary grammar slot corresponding to the directed arc.

Figure 7 is a text sentence pattern network determined according to collected corpus data in a scenario of phone calling or message sending. The directed arc with a label "<xxxx>" is called an ordinary grammar slot, which contains at least one entry, and it is required to complete the collection of all entries in the stage of determining the text sentence pattern network. Figure 7 includes two ordinary grammar slots, namely <phone> and <sth>, where <phone> corresponds to a content of a text entry in front of a name in an address book in the scenario corpus use case, such as "I want to give" and "send a message", which are two entries of the grammar slot <phone>; <sth> indicates a content of a text entry after the name of the address book in the use case, such as "a call" and "for me", which are two entries of the grammar slot <sth>. The directed arc with a label "xxx" is called a replaceable grammar slot, and the replaceable grammar slot means that in a sentence pattern definition stage, no actual entry needs to be carried but only a "#placehollder#" placeholder is used. The actual entries are dynamically transmitted when constructing the speech recognition decoding network. The "name" in Figure 7 is a replaceable grammar slot, and the subsequent dynamically constructed domain keyword network is inserted into the replaceable grammar slot to form a complete speech recognition decoding network. A last type of directed arc with a label "-" is called a dotted arc. The dotted arc refers to a directed arc that does not have information of the grammar slot and the entry, indicating that the path is optional, and the dotted arc has a corresponding grammar slot. The dotted arc is used to indicate that in the subsequent network construction process, a decoding path that can skip the grammar slot is also constructed. For example, as shown in Figure 7, the dotted arc between a node 2 and a node 4 and the dotted arc between the node 2 and a node 3 correspond to the grammar slot <sth>, indicating that the recognition result may not pass through this grammatical slot. The text sentence pattern network in Figure 7 defines two sentence patterns, that is, <phone>+name and <phone>+name+<sth>. The speech recognition result obtained by the network conforms to one of these two sentence patterns. For example, the use case "give a call to John" only includes two slots, that is, an ordinary grammar slot <phone>="give a call to" and a replaceable grammar slot name="John ". Since there are many pieces of entry data in the general grammar slot in actual use, for the convenience of explanation, only a small number of entries are used to describe related concepts in subsequent embodiments.

Furthermore, all grammar slots in the text sentence pattern network may be marked with an ID (identifier), which is defined as a field slot_id of the grammar slot, to set a global unique identifier.

Finally, the sentence pattern defined by the sentence network, the grammar slot, and the entry of general grammar slot constitute the text sentence pattern network.

In step A2, the entry in the ordinary grammar slot of the text sentence pattern network is divided and the word node is expanded based on the divided result to obtain a word-level sentence pattern decoding network.

Specifically, based on the grammar slot information in the text sentence pattern network constructed above, the entry in the ordinary grammar slot is parsed, the entry in the ordinary grammar slot is divided and the word node is expanded based on the divided result to obtain the word-level sentence pattern decoding network.

The word-level sentence pattern decoding network includes several nodes and directed arcs between the nodes. When constructing the word-level sentence pattern decoding network, each entry in the ordinary grammar slot is divided firstly to obtain words corresponding to each entry.

Secondly, the word node is expanded by utilizing the words corresponding to the same entry, that is, the divided results of the same entry are connected in series through nodes and directed arcs to obtain a word string corresponding to the entry. The directed arc between the two nodes is marked with word information obtained by word division, where the left and right of a colon represent input information and output information respectively, and the input information is the same as the output information here.

Finally, referring to the above node expansion method, multiple words obtained by dividing a single entry are connected in series, the word strings correspond to different entries of the same ordinary grammar slot are connected in parallel, and the placeholder "#placeholder#" is used in the replaceable grammar slot without any expansion, and the network nodes are numbered in order, where words with the same start node identifier share a same start node, words with the same end node identifier share a same end node, and the word-level sentence pattern decoding network can be obtained.

A schematic diagram of a simple word-level sentence pattern decoding network of an address book is shown in Figure 2. The grammar slot <phone> includes three entries of "I want to give", "send a message to" and "give a call". The grammar slot <sth> includes three entries of "for me", "a call" and "a call with her number". The connection between a node 10 and a node 18 indicates moving directly from the node 10 to an end node, and "</s>" on the arc represents silence.

In step A3, each word in the ordinary grammar slot of the word-level sentence pattern decoding network is replaced with a corresponding pronunciation, and the pronunciation node is expanded based on the pronunciation corresponding to the word, to obtain a pronunciation-level sentence pattern decoding network, where the pronunciation-level sentence pattern decoding network serves as the sentence pattern decoding network in the scenario to which the speech to be recognized belongs.

Specifically, firstly, each word in the ordinary grammar slot of the word-level sentence decoding network is replaced with the corresponding pronunciation.

Exemplarily, a corresponding relationship between existing words and pronunciations may be queried through a pronunciation dictionary, so as to determine a pronunciation corresponding to each word marked on the directed arc in the ordinary grammar slot of the word-level sentence pattern decoding network. On this basis, a word marked on the directed arc is replaced by a pronunciation corresponding to the word.

Secondly, each pronunciation in the word-level sentence pattern decoding network is divided into pronunciation units, and the pronunciation node is expanded based on each pronunciation unit corresponding to the pronunciation to obtain the pronunciation-level sentence pattern decoding network.

That is, a pronunciation unit is determined for pronunciation on each directed arc of the word-level sentence pattern decoding network, and the pronunciation unit is divided. In the present disclosure, the pronunciation is exemplarily divided into phoneme sequences. For example, the word "I" is pronounced as a monophone "ay", and the word "give" is pronounced as a phoneme string "g ih v".

On this basis, the pronunciation nodes of the pronunciation are expanded and connected in series according to the arrangement order and quantity of the pronunciation units. Exemplarily, the same as the word node expansion, phonemes of the same pronunciation are connected in series through nodes and directed arcs to obtain a phoneme string corresponding to the pronunciation. Then, the pronunciation is replaced by a corresponding phoneme string and the word-level sentence decoding network is expanded to be a pronunciation-level sentence decoding network. During the expansion of the pronunciation node, the replaceable grammar slot is still not expanded. The pronunciation-level sentence pattern decoding network serves as the sentence pattern decoding network in the service scenario to which the speech to be recognized belongs.

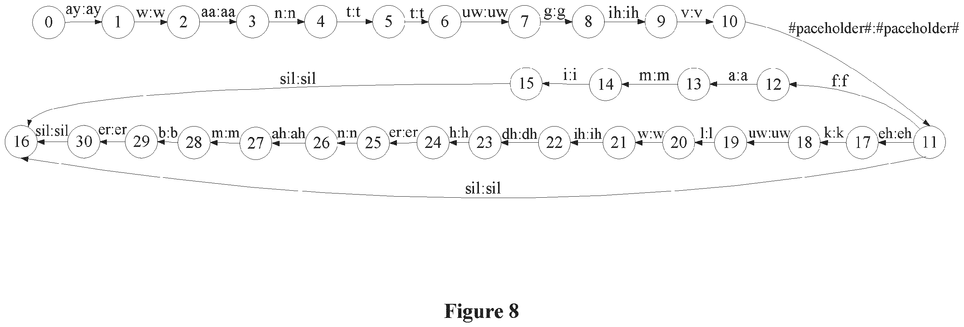

Figure 8 shows a schematic diagram of a simple pronunciation-level sentence decoding network.

In addition, in order to facilitate subsequent network structured storage, dynamic insertion, update of the sub-network, and decoding traversal in the computer, the nodes in the sentence pattern decoding network are numbered in sequence, the pronunciation units with the same start node ID share a same starting point, and the pronunciation units with the same end node ID share a same end node. A single node in the network includes 3 attribute fields of an id number, the number of incoming arcs, and the number of outgoing arcs, which constitute a node storage triplet. The incoming arc of a node indicates a directed arc pointing to the node, and the outgoing arc indicates a directed arc sent from the node. A single directed arc in the network includes 4 attribute fields, i.e. the number of the left node, the number of the right node, pronunciation information on the arc, and the grammar slot identifier slot_id. In addition, the total number of nodes and the total number of arcs in the network are recorded.

Further, it is also possible to record the position information of the left and right nodes of the grammar slot in the sentence pattern decoding network. As shown in Figure 8, the left node position of the ordinary grammar slot <phone> in the network is 0, and the right node position is 10; the left node position of the replaceable grammar slot name is 10, and the right node position is 11; the left node position of the ordinary grammar slot <sth> is 11, and the right node position is 16.

Furthermore, the qualified arcs in the obtained pronunciation-level sentence pattern decoding network may be merged and optimized, and redundant nodes may be deleted to reduce the complexity of the network. The specific method is the same as the general decoding network optimization method, and is not described in detail here.

The decoding network obtained after completing the above steps is the sentence pattern decoding network, which may be loaded onto the cloud speech recognition service as a global resource. However, since information of a real address book is not recorded in the replaceable grammar slot, the sentence pattern decoding network does not yet have a decoding function actually.

Depending on the sentence pattern decoding network constructed above, combined with the domain keyword set in the service scenario to which the speech to be recognized belongs, a speech recognition decoding network that is actually used to decode the acoustic state sequence of the speech to be recognized can be constructed.

A process of constructing the speech recognition decoding network is further described in the embodiment of the present disclosure.

According to an embodiment of the present disclosure, a speech recognition decoding network is constructed by performing the following steps B 1 to B3.

In step B1, a pre-constructed sentence pattern decoding network in the scenario to which the speech to be recognized belongs is obtained.

Specifically, the sentence pattern decoding network in the service scenario to which the speech to be recognized belongs may be constructed in advance according to the above embodiments. In this case, the sentence pattern decoding network may be directly called. Alternatively, as described in the above embodiments, when step B 1 is performed, the sentence pattern decoding network is constructed in real time.

In step B2, a domain keyword network is constructed based on the domain keywords in the domain keyword set in the scenario to which the speech to be recognized belongs.

Specifically, the domain keyword set in the scenario to which the speech to be recognized belongs refers to a set including all domain keywords in the service scenario to which the speech to be recognized belongs. For example, in a case that the speech to be recognized is a speech in a scenario of voice call or voice text message, the domain keyword set in the scenario to which the speech to be recognized belongs may specifically be a personal name set including personal names in an address book of the user; in a case that the speech to be recognized is a speech in the voice navigation scenario, the domain keyword set in the scenario to which the speech to be recognized belongs may specifically be a place name set including place names in the region where the user is located.

In the embodiment of the present disclosure, the address book is used as a domain keyword set, and construction of a network of the personal names in the address book is taken as an example to describe the specific implementation process of constructing a domain keyword network.

It may be referred to the above process of constructing a sentence pattern decoding network for constructing a domain keyword network, the difference is that the constructed domain keyword network does not contains grammar slot information, and all grammar slots belong to the replaceable grammar slots by default.

Firstly, a word-level domain keyword network is constructed based on domain keywords in the domain keyword set in the service scenario to which the speech to be recognized belongs.

For example, word segmentation is performed for each personal name in the address book to obtain words contained in the personal name, and the words are connected in series through nodes and directed arcs to obtain a word string corresponding to the personal name. Word strings corresponding to different personal names are connected in parallel, that is, a word-level personal name network is constructed.

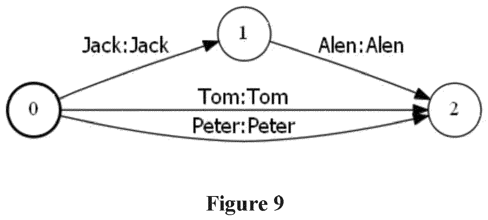

As shown in Figure 9, a word-level personal name network is constructed based on three contact entries "Jack Alen", "Tom" and "Peter".

Secondly, each word in the word-level domain keyword network is replaced with a corresponding pronunciation, and a pronunciation node is expanded according to the pronunciation corresponding to the word to obtain the pronunciation-level domain keyword network.

For example, pronunciation and phonemes contained in the pronunciation are determined for each word in the word-level personal name network, the phonemes are connected through nodes and directed arcs to form a phoneme string, and the pronunciation is replaced with a phoneme string corresponding to the pronunciation, so as to obtain the pronunciation-level personal name network.

The construction of the word-level domain keyword network and the processing of pronunciation replacement may be referred to the corresponding process of constructing the sentence pattern decoding network described in the above embodiments.

Through the above description, a pronunciation-level domain keyword network is obtained, which is the final constructed domain keyword network. In this network, a node with no incoming arc is a start node, and a node with no outgoing arc is an end node.

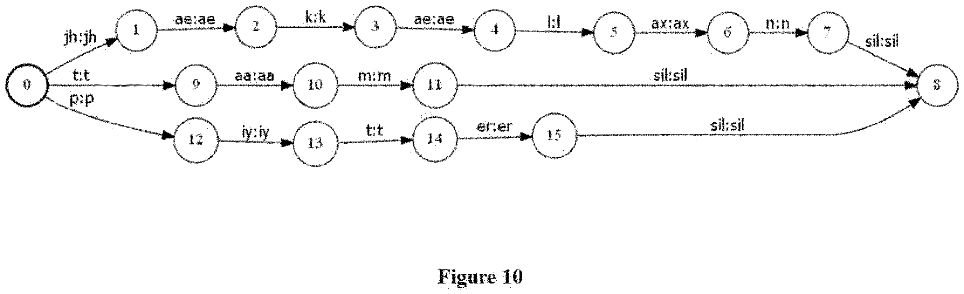

Figure 10 shows the pronunciation-level personal name network obtained after performing pronunciation replacement on the word-level personal name network shown in Figure 9. In this network, a node 0 is a start node, and a node 8 is an end node.

In step B3, the domain keyword network is inserted into the sentence pattern decoding network to obtain a speech recognition decoding network.

From the above description, it can be seen that the sentence pattern decoding network and domain keyword network finally constructed by constructing a word-level network and performing pronunciation expansion on the word-level network including nodes and directed arcs connecting the nodes, and pronunciation information or placeholders are stored on the directed arcs between nodes. Specifically, pronunciation information of a text in a slot is stored on a directed arc corresponding to an ordinary grammar slot of the sentence pattern decoding network, a placeholder is stored on a directed arc corresponding to a replaceable grammar slot of the sentence pattern decoding network, and the pronunciation information of the text in the slot is stored on a directed arc corresponding to each grammar slot of the domain keyword network.

On this basis, the domain keyword network are connected to the left and right nodes of the replaceable grammar slot of the sentence pattern decoding network through directed arcs, that is, directed arcs of the replaceable grammar slot in the sentence pattern decoding network is replaced by the domain keyword network to construct a speech recognition decoding network.

In a case of connecting the domain keyword network with the left and right nodes of the replaceable grammar slots of the sentence pattern decoding network, in order to ensure that the directed arc between adjacent connected nodes stores effective pronunciation information, in the embodiment of the present disclosure, a right node of each outgoing arc of a start node in the domain keyword network is connected with a left node of the replaceable grammar slot through a directed arc which stores pronunciation information on each outgoing arc of the start node in the domain keyword network; and a left node of each incoming arc of an end node in the domain keyword network is connected with a right node of the replaceable grammar slot through a directed arc which stores pronunciation information on each incoming arc of the end node in the domain keyword network. In this way, the speech recognition decoding network is constructed.

In a preferred embodiment, in order to improve the efficiency of inserting the domain keyword network into the sentence pattern decoding network, the first arc and the last arc of each keyword in the domain keyword network store a unique identifier corresponding to the keyword according to the embodiment of the present disclosure. The unique identifier may be exemplarily set as a hash code of the keyword. For example, in the pronunciation-level personal name network described in Figure 10, the directed arc between a node 0 and a node 1, and the directed arc between a node 7 and a node 8 respectively stores a hash code corresponding to the personal name "Jack Alen".

Correspondingly, a network-in keyword information set is set in the embodiment of the present disclosure. The keyword information set stores a unique identifier of the keyword that is inserted into the sentence pattern decoding network, and the numbers of the left and right node of the directed arc where the unique identifier is located in the sentence pattern decoding network.

Exemplarily, the network-in keyword information set may adopt a HashMap storage structure of a *key:value* structure. The *key* is a hash code corresponding to the domain keyword, and the *value* is a set of the numbers of node pairs of the directed arc where the hash code is located. The initial HashMap is empty, during the entire recognition service process, HashMap uniquely stores hash codes and the numbers of the node pairs of all dynamic incoming domain keyword entries, but HashMap does not record a user ID and a mapping relationship between the user ID and the domain keyword set.

The network-in keyword information set is set to show information of domain keywords inserted into the sentence pattern decoding network, that is, show information of the domain keywords that already exist in the speech recognition decoding network. In this way, each time a domain keyword network is inserted, it may be determined whether the domain keyword is inserted by querying the network-in keyword information set, and if the domain keyword to be inserted already exists in the speech recognition decoding network, the insertion of the current domain keyword may be cancelled, and the insertion of other domain keywords is performed.

Based on the above ideas, when inserting the domain keyword network into the sentence pattern decoding network, each outgoing arc of the start node in the domain keyword network is traversed, and for each outgoing arc that is traversed, whether a keyword corresponding to an unique identifier on the outgoing arc is already inserted into the sentence pattern decoding network is determined according to the unique identifier and the network-in keyword information set.

If the keyword corresponding to the unique identifier is not inserted into the sentence pattern decoding network, a right node of the traversed outgoing arc is connected to a left node of the replaceable grammar slot through a directed arc, pronunciation information on the traversed outgoing arc is stored on the directed arc, and the number of incoming arcs or outgoing arcs of the nodes at both ends of the directed arc is updated.

Exemplarily, when the personal name network is inserted into the sentence pattern decoding network, each outgoing arc of the start node in the personal name network is traversed, and for each traversed outgoing arc, a hash code of a personal name on the outgoing arc is obtained. Comparing the hash code with all the hash codes in the network-in keyword information set, if the hash code matches a hash code in the network-in keyword information set the network, it means that the personal name corresponding to the hash code has been inserted into the sentence pattern decoding network. In this case, the outgoing arc is skipped and determination is made for the hash code for the next outgoing arc.

If the hash code of the traversed outgoing arc does not match any hash code in the network-in keyword information set, it means that the personal name corresponding to the hash code has not been inserted into the sentence pattern decoding network. In this case, the right node of the traversed outgoing arc is connected to the left node of the replaceable grammar slot of the sentence pattern decoding network through a directed arc, the pronunciation information on the traversed outgoing arc is stored on the directed arc, and the number of incoming or outgoing arcs of the nodes at both ends of the directed arc is updated.

In the above process, the right node of each outgoing arc of the start node in the domain keyword network can be connected to the left node of the replaceable grammar slot in the sentence pattern decoding network.

Correspondingly, each incoming arc of the end node of the domain keyword network is traversed, and based on the unique identifier on each traversed incoming arc and the keyword set information inserted into the network, whether the keyword corresponding to the unique identifier has been inserted into the sentence pattern decoding network is determined.

If the keyword corresponding to the unique identifier is not inserted into the sentence pattern decoding network, the left node of the traversed incoming arc is connected to the right node of the replaceable grammar slot through a directed arc, and the pronunciation information on the traversed incoming arc is stored on the directed arc.

Exemplarily, in a case of inserting the personal name network into the sentence pattern decoding network, each incoming arc of the end node in the personal name network is traversed, and for each traversed incoming arc, a hash code of the personal name on the incoming arc is obtained. By comparing the hash code with all the hash codes in the network-in keyword information set, if the hash code matches a hash code in the network-in keyword information set, it means that the personal name corresponding to the hash code has been inserted into the sentence pattern decoding network. In this case, the incoming arc is skipped, and the determination is performed for a hash code of a next incoming arc.

If the hash code of the traversed incoming arc does not match any hash code in the network-in keyword information set, it means that the personal name corresponding to the hash code has not been inserted into the sentence pattern decoding network. In this case, the left node of the traversed incoming arc is connected to the right node of the replaceable grammar slot of the sentence pattern decoding network through a directed arc, the pronunciation information on the traversed incoming arc is stored on the directed arc, and the number of incoming or outgoing arcs of the nodes at both ends of the directed arc is updated.

With the above process, the left node of each incoming arc of the end node in the domain keyword network is connected to the right node of the replaceable grammar slot in the sentence pattern decoding network.

With the above processing, each keyword in the domain keyword network is inserted into the sentence pattern decoding network. In the specific implementation, the order of performing insertion of the start node and end node of the domain keyword network described above may be flexibly adjusted. For example, the insertion may be performed on the start node of the domain keyword network first, or be performed on the end node of the domain keyword network first, or be performed on the start node and end node of the domain keyword network simultaneously.

Further, in a case that a keyword in the domain keyword network is inserted into the sentence pattern decoding network, that is, after a right node of a first arc in a network path where the keyword is located is connected to a left node of the replaceable grammar slot of the sentence pattern decoding network, and a left node of a last arc of the network path where the keyword is located is connected to a right node of the replaceable grammar slot of the sentence pattern decoding network, the numbers of the left and right nodes in the sentence pattern decoding network of the directed arc where the unique identifier is located are stored in the network-in keyword information set according to the embodiment of the present disclosure.

For example, for the pronunciation-level personal name network described in Figure 10, in a case that the node 1 in the network path where the personal name "Jack Alen" is located is connected to the left node 10 of the replaceable grammar slot of the sentence pattern decoding network shown in Figure 8, and the node 7 in the network path where "Jack Alen" is located is connected to the right node 11 of the replaceable grammar slot of the sentence pattern decoding network shown in Figure 8, the hash code of personal name "Jack Alen" and the numbers of the left and right nodes of the directed arc are stored in the network-in keyword information set respectively as the key and the value.

Since the speech recognition decoding network is constructed on the cloud server according to the embodiment of the present disclosure, each user may upload a domain keyword set to the cloud server, and the cloud server may construct a large-scale or a very large-scale speech recognition decoding network based on the domain keyword set upload by the user, so as to meet calling needs of various users.

The setting of the network-in keyword information set can improve the efficiency of inserting domain keywords into the speech recognition decoding network, and facilitate the selection of a specific decoding path according to the speech recognition needs of a current user.

For example, in the service scenario where a user makes a phone call by voice, the speech recognition decoding network constructed according to the above solution not only includes address book entry information dynamically inputted from the current session, but also includes address book information of other historical sessions, which are stored in the network-in keyword information set in the form of hash codes.

In a case of recognizing the current session, recognition should be made within the current inputted address book, so as to accurately recognize which contact in the address book the user wants to call. In this case, the path of the speech recognition decoding network needs to be updated, so that the decoding path is limited within the current inputted address book.

The specific implementation is described as follows.

Each unique identifier in the network-in keyword information set is traversed. If a traversed unique identifier is not a unique identifier of a keyword in the domain keyword set in the service scenario to which the speech to be recognized belongs, the directed arc between the left node and right node corresponding to the unique identifier is disconnected.

The service scenario where the user makes a phone call by voice is still taken as an example. In order to decode the user voice, the user address book and the sentence pattern decoding network are used to construct a speech recognition decoding network. After the current address book is inserted into the speech recognition decoding network, each hash code in the network-in keyword information set is traversed. If the traversed hash code is a hash code of a personal name in the inputted address book, no processing is required. If the traversed hash code is not a hash code of a personal name in the inputted address book, the left and right code numbers corresponding to the hash code are determined by querying the network-in keyword information set, and the directed arc between the left and right nodes are disconnected. Then, in the speech recognition decoding network that actually performs decoding, only a decoding path of the current inputted address book is connected. Therefore, only the speech recognition result of calling any personal name in the current address book can be decoded, which also conforms to the user expectation.

It can be seen that with the above processing, in a case of decoding the current speech, the decoding path can be limited to be within the domain keywords set inputted this time, which is beneficial to narrowing the path search range, improving decoding efficiency and reducing decoding errors.

Based on the description of the above embodiments of the various speech recognition methods, it can be seen that the speech recognition decoding network constructed based on the domain keyword set and the sentence pattern decoding network is the main network for realizing speech recognition involving domain keywords.

It has been found that the speech recognition decoding network has two deficiencies, one is the problem of false triggering of domain keywords, and the other is the problem of insufficient network coverage.

The problem of false triggering is the most common problem during the speech recognition of speech recognition decoding network based on fixed sentence patterns, and it is also the most difficult problem to solve. The false triggering means that an actual content of a piece of audio is not a sentence pattern in the speech recognition decoding network with fixed sentence patterns, but a final result is a result in the speech recognition decoding network with fixed sentence patterns. The false triggering of domain keywords means that no domain keyword exist in the real result or the domain keyword is not in the domain keyword set inputted this time, but the final result is that the result of the speech recognition decoding network wins, and thus a wrong domain keyword is provided. For example, in a phone call scenario, no personal name exists in the real result or the personal name is not in the address book inputted this time, but the final result is that the result outputted by the speech recognition decoding network wins, and a wrong personal name is provided.

The false triggering of domain keywords are generally classified into the following four types: (1) a false triggering caused by the same pronunciation of the domain keyword and a real result; (2) a false triggering caused by a similar pronunciation of the domain keyword and the real result; (3) a false triggering caused by an incentive strategy in a case of a great difference in pronunciation between the domain keyword and the real result; (4) a false triggering caused by recognition of the domain keyword by the speech recognition decoding network in a case that no domain keyword exists in the real result.

Regarding the fourth case of false triggering mentioned above, the prime cause may be insufficient sentence pattern coverage in the speech recognition decoding network.

In view of the fourth case of false triggering, a corresponding solution to the problem of insufficient sentence pattern coverage of the speech recognition decoding network is provided according to the embodiment of the present disclosure. For other cases of false triggering, other solutions may be provided in subsequent embodiments.

From the above description, it can be seen that the speech recognition decoding network is constructed based on the sentence pattern decoding network, that is, based on the sentence pattern. The advantage of this network construction method is that the speech sentence pattern can be accurately determined, and the disadvantage is that the sentence pattern cannot be recognized if it is not in the network. The corpus used to construct the network often cannot cover all sentence patterns in all scenarios, so a problem of insufficient sentence pattern coverage is described in the speech recognition decoding network.

The general speech recognition model is trained based on massive data, and the sentence patterns are expansive and have various forms. In a specific service scenario, the result errors of the general speech recognition model are mainly domain keyword recognition errors, and the main reason for the errors is that the general speech recognition model includes language scores during corpus training, and the score of domain keywords often does not be determined by fitting based on the corpus. Although the domain keywords recognized by the general speech recognition model are wrong, the sentence pattern is correct, this is mainly because that the sentence pattern can be fitted by training data.

Therefore, the sentence pattern information of the recognition result of the general speech recognition model is more reliable, and the domain keyword information of the recognition result of the speech recognition decoding network is more reliable. Based on this idea, a method based on the sentence pattern of the general speech recognition model is provided according to the present disclosure to solve the problem of insufficient sentence pattern coverage of the speech recognition decoding network.

specifically, in a case that the acoustic state sequence of the speech to be recognized is decoded respectively by using the speech recognition decoding network and the general speech recognition model constructed according to the technical idea of the present disclosure to obtain the first speech recognition result and the second speech recognition result, the first speech recognition result is corrected based on the second speech recognition result.

Based on the above description, it can be seen that, the domain keyword in the first speech recognition result is more accurate, and the sentence pattern information in the second speech recognition result is more accurate. Therefore, in order to correct the first speech recognition result based on the second speech recognition result, the non-domain keyword in the first speech recognition result is corrected to make the sentence pattern more accurate.

Therefore, in the embodiment of the present disclosure, a content in the first speech recognition result is classified into a domain keyword content and a non-domain keyword content. Correspondingly, according to the content correspondence between the second speech recognition result and the first speech recognition result, a content in the second speech recognition result is classified into a reference text content and a non-reference text content, where the reference text content in the second speech recognition result refers to a text content in the second speech recognition result that matches the non-domain keyword content of the first speech recognition result.

The text content that matches the non-domain keyword content in the first speech recognition result may specifically be a string content most similar to the non-domain keyword content in the first speech recognition result, or a string content that has a similarity greater than a set threshold.

Based on the text content classification, in order to correct the first speech recognition result based on the second speech recognition result, the reference text content in the second speech recognition result is used to correct the non-domain keyword in the first speech recognition result to obtain the corrected first speech recognition result.

The above correction process may be specifically implemented by the following steps C1 to C3.

In step C1, the domain keyword content and non-domain keyword content are determined from the first speech recognition result, and the text content corresponding to the non-domain keyword content in the first speech recognition result is determined from the second speech recognition result and is used as the reference text content.

In a preferred embodiment, the first speech recognition result is compared with the second speech recognition result based on an edit distance algorithm according to the embodiment of the present disclosure, and the reference text content is determined from the second speech recognition result.

Specifically, firstly, an edit distance matrix between the first speech recognition result and the second speech recognition result is determined based on the edit distance algorithm. The edit distance matrix includes edit distances between characters in the first speech recognition result and characters in the second speech recognition result.

Secondly, based on the edit distance matrix and the non-domain keyword content in the first speech recognition result, the text content corresponding to the non-domain keyword content in the first speech recognition result is determined from the second speech recognition result, and is used as the reference text content.

According to different positions of the domain keywords in the first speech recognition result, the non-domain keyword content in the first speech recognition result may be classified into a character string before the domain keyword, and/or, a character string after the domain keyword.

Taking the character string before the domain keyword as an example, based on the character string and the edit distance matrix, a character string with the smallest edit distance to the character string is selected from the second speech recognition result, which is the reference text content corresponding to the character string. Similarly, for the character string after the domain keyword, the corresponding reference text content can also be determined through the above method.

In step C2, the corrected non-domain keyword content is determined based on the reference text content in the second speech recognition result and the non-domain keyword content in the first speech recognition result.

In the embodiment of the present disclosure, based on a character difference between the reference text content in the second speech recognition result and the non-domain keyword content in the first speech recognition result, the target text content in the second speech recognition result or the non-domain keyword content in the first speech recognition result is determined as the corrected non-domain keyword content.

A target text content in the second speech recognition result refers to a text content in the second speech recognition result that corresponds to a position of the non-domain keyword content in the first speech recognition result.

Specifically, a position of the target text content in the second speech recognition result is the same as the position of the non-domain keyword content in the first speech recognition result.

For example, in a case that the non-domain keyword content in the first speech recognition result is a text content before the domain keyword in the first speech recognition result, the target text content in the second speech recognition result is specifically a text content before a position of the domain keyword in the first speech recognition result after being mapped to the second speech recognition result. The mapping between the positions of domain keyword in the first speech recognition result and the second speech recognition result may be realized based on the edit distance matrix.

Taking a phone call scenario as an example, a process of determining a corrected non-personal name content is described. In the following description, an example is taken in which a personal name in the first speech recognition result is in the middle of the sentence of the first speech recognition result, and the process of correcting a character string before the personal name in the first speech recognition result is mainly described. Referring to the description below, the process may also be performed for the character string after the personal name accordingly.

After the reference text content is determined from the second speech recognition result based on the edit distance matrix between the first speech recognition result and the second speech recognition result and the non-domain keyword content in the first speech recognition result, the reference text content in the second speech recognition result is compared with the non-domain keyword content in the first speech recognition result, and whether the reference text content in the second speech recognition result is the same as the non-domain keyword content in the first speech recognition result is determined.

If the reference text content in the second speech recognition result is the same as the non-domain keyword content in the first speech recognition result, the target text content in the second speech recognition result is determined as the corrected non-domain keyword content.

If the reference text content in the second speech recognition result is different from the non-domain keyword content in the first speech recognition result, whether characters of the non-domain keyword content in the second speech recognition result is more than characters of the non-domain keyword content in the first speech recognition result is determined, and a difference between the number of the characters of the non-domain keyword content in the second speech recognition result and the number of the characters of the non-domain keyword content in the first speech recognition result does not exceed a set threshold is determined.

If the number of characters of the non-domain keyword content in the second speech recognition result is more than number of characters of the non-domain keyword content in the first speech recognition result, and the difference between the number of the characters of the non-domain keyword content in the second speech recognition result and the number of the characters of the non-domain keyword content in the first speech recognition result does not exceed the set threshold, target text content in the second speech recognition result is determined as the corrected non-domain keyword content.

If the number of characters of the non-domain keyword content in the second speech recognition result is less than the number of characters of the non-domain keyword content in the first speech recognition result, and/or the difference between the number of the characters of the non-domain keyword content in the second speech recognition result and the number of the characters of the non-domain keyword content in the first speech recognition result exceeds the set threshold, the non-domain keyword content in the first speech recognition result is determined as the corrected non-domain keyword content.

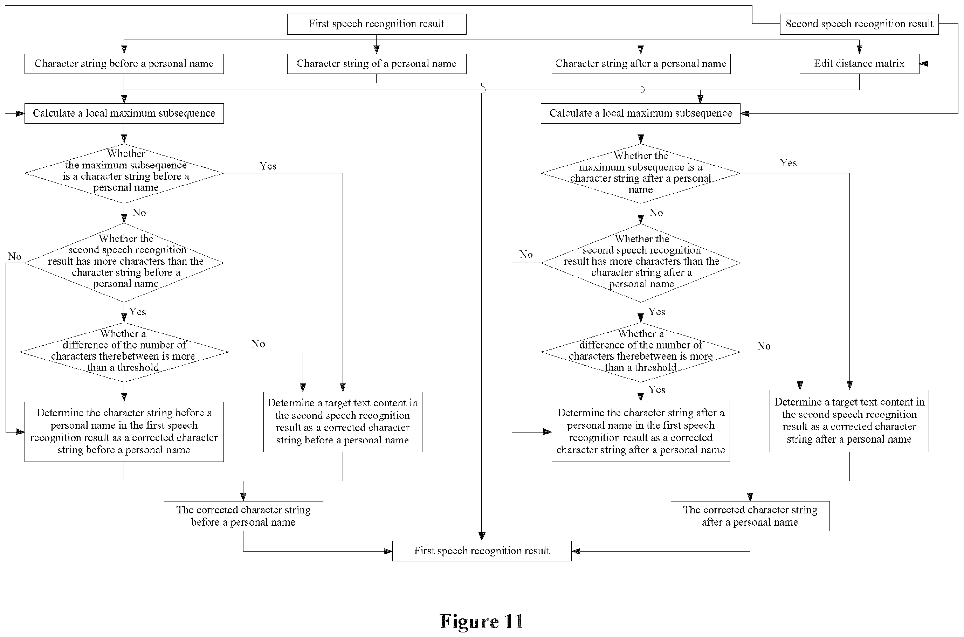

Specifically, referring to the correction process shown in Figure 11, based on the edit distance matrix between the first speech recognition result and the second speech recognition result, and the character string before the personal name in the first speech recognition result, a local maximum subsequence between the character string before the personal name and the second speech recognition result is calculated, and the local maximum subsequence is the reference text content determined from the second speech recognition result.

Then, whether the maximum subsequence is the character string before the personal name is determined, that is, whether the reference text content is the same as the character string before the personal name is determined.

If the reference text content is the same as the character string before the personal name, the target text content in the second speech recognition result is determined as the corrected character string before the personal name. In this case, the target text content in the second speech recognition result is specifically the text content before a position of the personal name in the first speech recognition result after being mapped to the second speech recognition result based on the edit distance matrix between the first speech recognition result and the second speech recognition result.

If the reference text content is different from the character string before the personal name, whether the number of characters of the second speech recognition result is greater than the number of characters of the character string before the personal name is determined.

If the number of characters of the second speech recognition result is less than or equal to the number of characters of the character string before the personal name, the character string before the personal name in the first speech recognition result remains unchanged, that is, the character string before the personal name in the first speech recognition result is determined as the corrected character string before the personal name.

If the number of characters of the second speech recognition result is greater than the number of characters of the character string before the personal name, it is further determined whether the difference between the number of character strings between the second speech recognition result and the number of character strings before the personal name is greater than a set threshold. Specifically, it is further determined whether an excess number of characters between the second speech recognition result and the character string before the personal name is more than 20% of the number of characters of the character string before the personal name is determined.

If the excess number of characters is more than the set threshold, the character string before the personal name in the first speech recognition result remains unchanged, that is, the character string before the personal name in the first speech recognition result is determined as the corrected character string before the personal name.

If the excess number of characters is less than or equal to the set threshold, the target text content in the second speech recognition result is determined as the corrected character string before the personal name.

Similarly, for the character string after the personal name in the first speech recognition result, the above description may be referred to determine the corrected character string after the personal name.

In step C3, the corrected first speech recognition result is obtained by combining the corrected non-domain keyword content and the domain keyword content.

Specifically, the corrected non-domain keyword content and the domain keyword content are combined based on a positional relationship between the original non-domain keyword content and the domain keyword content, to obtain a combination result as the corrected first speech recognition result.

For example, as shown in Figure 11, the corrected first speech recognition result is obtained by connecting and combining the corrected character string before the personal name, the character string of the personal name, and the corrected character string after the personal name sequentially.

By correcting the first speech recognition result according to the processing process, the output result of the speech recognition decoding network contains more accurate domain keyword information, and also integrate the accurate sentence pattern information recognized by the general speech recognition model, so that the recognition result of the speech recognition decoding network is more accurate and has a higher sentence pattern coverage, and the problem of false triggering caused by the insufficient sentence pattern coverage of the speech recognition decoding network can also be solved.

As mentioned in the above embodiment, in a case of decoding the acoustic state sequence of the speech to be recognized by using multiple models, in order to make the result of the speech recognition decoding network win in the final comparison, incentive is performed on the result of the speech recognition decoding network, including acoustic incentive and verbal incentive. In the process of incentive, inappropriate incentive may cause insufficient incentive, or may cause excessive incentive which may lead to false triggering, that is, the second and third domain keyword false triggering as mentioned above, namely: (2) a false triggering caused by a similar pronunciation of the domain keyword and the real result; (3) a false triggering caused by an incentive strategy in a case of a great difference in pronunciation between the domain keyword and the real result.

In order to solve the above problems to ensure that the result of the speech recognition decoding network result is not knocked out by the results of other models through appropriate incentives, and to avoid recognition false triggering of the speech recognition decoding network due to excessive incentive, a preferred incentive solution is provided according to the present disclosure.

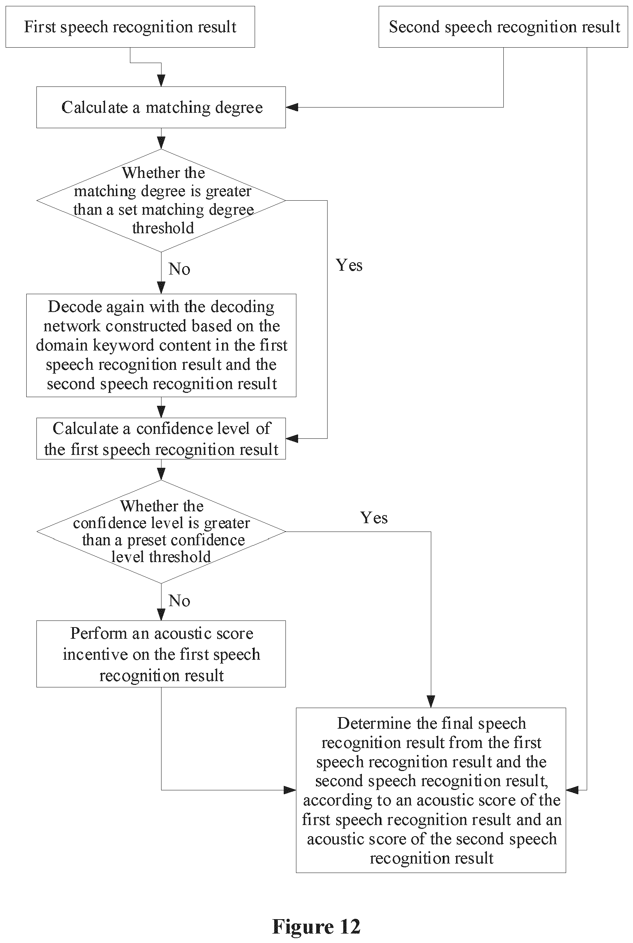

In the embodiment of the present disclosure, in a case of decoding the acoustic state sequence of the speech to be recognized by using the speech recognition decoding network and the general speech recognition model, the final speech recognition result may be determined from the first speech recognition result outputted by the speech recognition decoding network and the second speech recognition result outputted by the general speech recognition model with reference to the flow process shown in Figure 12 according to the following steps D1 to D3.

In step D1, a matching degree between the first speech recognition result and the second speech recognition result is determined by comparing the first speech recognition result with the second speech recognition result, and a confidence level of the first speech recognition result is determined based on the matching degree between the first speech recognition result and the second speech recognition result.

Specifically, the matching degree is determined by calculating a character edit distance between the first speech recognition result and the second speech recognition result through an edit distance algorithm.

After the matching degree between the first speech recognition result and the second speech recognition result is determined, the confidence level of the first speech recognition result is further determined based on the matching degree between the first speech recognition result and the second speech recognition result.

Exemplarily, in a case of determining the confidence level of the first speech recognition result, it is first determined whether the matching degree between the first speech recognition result and the second speech recognition result is greater than a set matching degree threshold. The matching degree threshold is a value that has the largest contribution rate to recognition calculated based on multiple test sets.

If the matching degree is greater than the set matching degree threshold, the confidence level of the first speech recognition result is determined based on the acoustic score of each frame of the first speech recognition result. That is, the acoustic scores of frames of the first speech recognition result are accumulated or weighted and accumulated, to obtain an accumulated result as the confidence level of the first speech recognition result.

If the matching degree is less than or equal to the set matching degree threshold, a decoding network is constructed based on the domain keyword content in the first speech recognition result and the second speech recognition result, the acoustic state sequence is decoded again by using the decoding network, and the first speech recognition result is updated with the decoding result; and the confidence level of the first speech recognition result is determined based on the acoustic scores of the frames of the updated first speech recognition result.

Specifically, if the matching degree between the first speech recognition result and the second speech recognition result is less than or equal to the set matching degree threshold, a miniature decoding network is constructed based on the domain keywords in the first speech recognition result and the sentence pattern of the second speech recognition result, that is, the content in the second speech recognition result except the content corresponding to the domain keywords. It can be seen that the miniature decoding network only has one decoding path.

A decoding result is obtained by decoding the acoustic state sequence of the speech to be recognized with the miniature decoding network. The decoding result is determined as a new first speech recognition result. Then, the updated acoustic scores of the frames of the first speech recognition result after decoding are accumulated or weighted and accumulated to be used as a finally determined confidence level of the first speech recognition result.

In a case that the confidence of the first speech recognition result is greater than the preset confidence level threshold, step D2 is performed. Based on the acoustic score of the first speech recognition result and the acoustic score of the second speech recognition result, the final speech recognition result is selected from the first speech recognition result and the second speech recognition result.

Specifically, the confidence level threshold refers to a score threshold determined through experiments that enables the first speech recognition result to win when comparing scores with other speech recognition results.

If the confidence level of the first speech recognition result is greater than the preset confidence level threshold, it means that, with the confidence level, the first speech recognition result cannot be easily knocked out when comparing the acoustic scores with other speech recognition results. In this case, the acoustic score of the first speech recognition result may be directly compared with the acoustic score of the second speech recognition result, and one or more speech recognition results with the highest acoustic score can be selected as the final speech recognition result.

When the confidence level of the first speech recognition result is less than or equal to the preset confidence level threshold, step D3 is performed to perform the acoustic score incentive on the first speech recognition result, and the final speech recognition result is selected from the first speech recognition result and the second speech recognition result based on the acoustic score of the first speech recognition result after incentive and the acoustic score of the second speech recognition result.

Specifically, if the confidence level of the first speech recognition result is less than or equal to the preset confidence level threshold, it indicates that the confidence level of the first speech recognition result is low. That is, the first speech recognition result may be knocked out when comparing the acoustic scores with other speech recognition results, thus the accurate domain keyword information included in the first speech recognition result is lost in the final selected speech recognition result, which may cause a recognition error, especially an error in recognition of the domain keywords.

In this case, in order to ensure that the first speech recognition result is not knocked out in the subsequent acoustic score competition, an acoustic score incentive is performed on the first speech recognition result in the embodiment of the present disclosure. Specifically, the incentive is performed on the acoustic score of the slot where the domain keyword in the first speech recognition result is located, to increase the acoustic score of the slot where the domain keyword in the first speech recognition result is located by a certain percentage, to increase the acoustic score of the first speech recognition result, so as to ensure that the first speech recognition result is not knocked out when comparing acoustic scores with other speech recognition results.

After the incentive is performed on the acoustic score of the first speech recognition result, the acoustic score of the first speech recognition result after incentive may be compared with the acoustic score of the second speech recognition result, to select one or more speech recognition results with the highest acoustic score as the final speech recognition result.

In the following, the specific implementation solution of performing the acoustic score incentive on the first speech recognition result described in the above embodiments is described.

The performing the acoustic score incentive on the first speech recognition result includes performing the acoustic score incentive on the slot where the domain keyword in the first speech recognition result is located. Specifically, the acoustic score of the slot where the domain keyword in the first speech recognition result is located is multiplied by an incentive coefficient, and the acoustic score of the first speech recognition result is determined based on the acoustic score of the domain keyword after incentive.

Specifically, the acoustic score incentive for the first speech recognition result may be realized by performing the following steps E1 to E3.

In step E1, an acoustic incentive coefficient is determined at least based on the domain keyword content and the non-domain keyword content in the first speech recognition result.

The acoustic incentive coefficient determines the strength of the acoustic score incentive for the first speech recognition result. A large incentive coefficient may cause an excessive incentive, which may in turn cause recognition false triggering as described above. A small incentive coefficient may fail to realize the incentive, resulting in that the first speech recognition result may be knocked out when comparing scores with other speech recognition results.

Therefore, the determination of the acoustic incentive coefficient is a key to solving the problem of false triggering of the domain keyword in the above embodiments and the problem of losing important domain keyword information during acoustic competition.

According to the embodiment of the present disclosure, the acoustic incentive coefficient is determined at least based on the domain keyword content and non-domain keyword content in the first speech recognition result, and may further be determined based on an actual service scenario and empirical parameters in actual service scenario.

In an embodiment, the acoustic incentive coefficient may be determined based on a priori coefficient of acoustic score incentive in the service scenario to which the speech to be recognized belongs, the number of characters and phonemes of the domain keyword in the first speech recognition result, and the total number of characters and phonemes in the first speech recognition result.

Specifically, in this embodiment, the acoustic incentive coefficient RC is determined according to the following equation:

$$RC = 1.0 + \alpha * \{ \beta * (SlotWC/SentWC) + (1-\beta) * (SlotPC/SentPC) \}$$

where a is the scenario priori coefficient. In the embodiment of the present disclosure, a is the incentive priori coefficient in the service scenario to which the speech to be recognized belongs. The positive value and negative value of a represents positive incentive and negative incentive respectively. As an open parameter, the priori coefficient $\alpha$ may be dynamically set in each time a session is recognized according to the requirement of a recognition system. For example, based on natural language processing (NLP) technology, an upper-level system may predict behavioral intention of a user through the context of user interaction, and dynamically adjust the coefficient in real time to meet the requirements of various scenarios.

In addition, due to inconsistency in the number of words and phoneme lengths of the words in domain keywords in service scenarios involving domain keywords, in order to improve the generalization capability of the acoustic incentive coefficient and the adaptability to different slots, and avoid inappropriate incentives, the acoustic incentive coefficient is set by fully considering the number of words (word count in slot, SlotWC) and the number of phonemes (phoneme count in slot, SlotPC) in the slot where the domain keyword is located (that is, the number of characters and the number of phonemes of the domain keyword), and the rate of the number of words in the sentence (word count in sentence, SentWC) to the number of phonemes (phoneme count in sentence, SentPC) (i.e. the total number of characters and phonemes in the first speech recognition result). An influence weight β is set for the number of characters and number of phonemes, so that the sum of the influence weights of characters and phonemes is 1. This solution limits the range of acoustic incentive coefficient, and realizes the adaptability of incentive under sentences and keywords of different lengths. In a specific scenario, if the calculated incentive coefficient RC is greater than 1.0, it is more inclined to output the first speech recognition result by the speech recognition decoding network as the recognition result, and on the contrary, it is more inclined to the output results of other models as the recognition result. In addition, the acoustic score incentive is only performed on the acoustic score of the slot where the domain keyword is located, so that interference of irrelevant context is eliminated, and the problem of recognition false triggering caused by excessive incentive is avoided.

In an embodiment, a score confidence level of the domain keyword content in the first speech recognition result may be calculated firstly based on the number of phonemes and the acoustic score of the domain keyword content in the first speech recognition result, and the number of phonemes and the acoustic score of the non-domain keyword content in the first speech recognition result; then, the acoustic incentive coefficient is determined based on the score confidence level of the domain keyword content in the first speech recognition result.

Specifically, by analyzing the acoustic state sequence of the speech recognition result, it can be seen that the score of the state sequence corresponding to the misrecognized word is low, that is why the score of the correct recognition result is usually the highest. In summary, the average score of the acoustic sequence of misrecognized results is low.

In a service scenario involving the domain keyword, although the domain keyword is misrecognized, the recognition of the sentence pattern is normal. That is, in the speech recognition result, the recognition effect of domain keyword is worse than the recognition effect of the non-domain keyword of the sentence. Based on this idea, a solution is provided according to the present disclosure to solve the false triggering caused by similar pronunciation of domain keywords and actual results through the score confidence level of domain keyword content.

In the solution of using the score confidence level of the domain keyword, the domain keyword and non-domain keyword in the first speech recognition result outputted by the speech recognition decoding network are separated from each other, a ratio of the total acoustic score of the domain keyword to the number of effective acoustic modeling factors occupied by the domain keyword, and a ratio of the total acoustic score of the non-domain keyword to the number of effective acoustic modeling factors occupied by the non-domain keyword are calculated respectively. Then, the first ratio is divided by the second ratio to obtain the score confidence level of the domain keyword.

The score confidence level $S_c$ of the domain keyword may be calculated according to the following equation:

$$S_c = \frac{S_p * N_a}{S_a * N_p}$$

where $S_p$ represents the acoustic score of the domain keyword in the first speech recognition result, $N_p$ represents the number of effective acoustic phonemes occupied by the slot where the domain keyword is located, $S_a$ represents the total acoustic score of the non-domain keyword, and $N_a$ represents the number of effective acoustic phonemes occupied by the slot where the non-domain keyword is located.

After the score confidence level of the domain keyword content in the first speech recognition result is obtained, an acoustic incentive coefficient for performing incentive on the domain keyword may be determined based on the score confidence level.

In an exemplary embodiment, the score confidence level of the domain keyword content in the first speech recognition result is compared with a preset confidence level threshold. The confidence level threshold is determined based on a probability of recognition false triggering caused by the acoustic incentive coefficient. When the score confidence level of the domain keyword content in the first speech recognition result is greater than the confidence level threshold, it may be determined that the domain keyword is likely to cause false triggering, and the acoustic incentive coefficient of the domain keyword may be decreased. When the score confidence level of the domain keyword content in the first speech recognition result is less than or equal to the confidence level threshold, it may be determined that the domain keyword is easily knocked out during competition, and the acoustic incentive coefficient of the domain keyword may be increased.

Further, in a case of determining the acoustic incentive coefficient based on the score confidence level of the domain keyword content in the first speech recognition result, the acoustic incentive coefficient may be determined by combining the score confidence level of the domain keyword content in the first speech recognition result, and the relationship between the predetermined acoustic incentive coefficient and the recognition effect and recognition false triggering.

Specifically, in the embodiment of the present disclosure, the recognition results of multiple test sets are analyzed, the influence of the value of the acoustic incentive coefficient on the recognition effect and recognition false triggering is counted, and the relationship between the acoustic incentive coefficient and the recognition effect and recognition false triggering is determined.

Based on the relationship between the acoustic incentive coefficient and the recognition effect and recognition false triggering, a value that is balanced between the improvement of the recognition rate and the reduction of false triggering is selected to determine the specific value of the acoustic incentive coefficient. The principle of selection is to ensure that the number of false triggering is much smaller than the number of improved recognition effects. The acoustic incentive coefficient selected in the embodiment of the present disclosure is an incentive coefficient that ensures the number of recognition false triggering to be one percent of the number that promotes the improvement of recognition effect.

In step E2, the acoustic score of the domain keyword content in the first speech recognition result is updated based on the acoustic incentive coefficient.

Specifically, the updated acoustic score of the domain keyword content is obtained by multiplying the acoustic score of the slot where the domain keyword content is located in the first speech recognition result by the acoustic incentive coefficient determined in the above steps.

In step E3, the acoustic score of the first speech recognition result is recalculated based on the updated acoustic score of the domain keyword content in the first speech recognition result and the acoustic score of the non-domain keyword content in the first speech recognition result.

Specifically, the acoustic score of the domain keyword content in the first speech recognition result is replaced by the updated acoustic score of the domain keyword content, and a sum or weighted sum of the acoustic scores of characters in the first speech recognition result is obtained as the updated acoustic score of the first speech recognition result.

In the following, specific implementation solutions of language model incentive involved in the above embodiments are described. In the following embodiments, the language model incentive for the third speech recognition result is taken as an example to describe the specific processing content of the language model incentive. It should be understood that the specific language model incentive process is not limited by an incentive object, and the language model incentive solution may also be applied to the incentive of other speech recognition results. For example, the solution of the language model incentive described in the following embodiments is also applicable to a solution of performing language model incentive on a candidate speech recognition result selected from the first speech recognition result and the second speech recognition result.

The language model incentive includes recalculating the score of the speech recognition result through the language model, so that the score of the speech recognition result carries a language component.

The language model incentive mechanism is mainly realized through two aspects: one is the clustering class language model, and the other is a strategy based on the matching of the domain keyword and the pronunciation sequence of the speech recognition result. A path of the speech recognition result is expanded, and the language score of the speech recognition result is determined based on the expanded path and the clustering language model.

Firstly, the clustering class model is described. In specific speech recognition service scenarios involving domain keywords, such as making a phone call, sending a text message, querying the weather, and navigation, the domain keywords in the scenarios may be limited to a limited range through enumeration or user-provided way, and the context of the domain keywords is usually presented in a specific sentence pattern.

In addition to a general training corpus, the clustering class language model also performs special processing for specific sentence patterns or sayings including domain keywords. The clustering language model defines a class for each specific scenario, and each scenario uses a special word (class) as the category label corresponding to the scenario for labelling and distinguishing. After all category labels are defined, domain keywords such as a personal name, a city name, an audio name and a video name in the training corpus are replaced with corresponding category labels to form the target corpus. The target corpus is added to the original training corpus and used for speech recognition training on the clustering language model. In this processing method, the special word *class* represents a probability of a class of words, so that the probability of words of the N-gram language model where the special word *class* is located in the clustering model is significantly higher than the probability of the specific domain keyword itself.

On the basis of the above category label, in the embodiment of the present disclosure, a path expansion is performed on the third speech recognition result based on the domain keyword set in the service scenario to which the speech to be recognized belongs and the category label corresponding to the service scenario.

Exemplarily, the domain keyword in the third speech recognition result is compared with the domain keyword in the domain keyword set in the service scenario to which the speech to be recognized belongs first.

As mentioned above, in specific speech recognition service scenarios that contain the domain keyword such as making a phone call, querying the weather, and navigation, the domain keyword is defined within a limited range.

Through enumeration, a user provided way, all domain keywords in the corresponding service scenario may be used as a static resource. By utilizing pronunciation dictionary resources, the pronunciation string information of the domain keyword under the service scenario to which the speech to be recognized belongs and the pronunciation string information of the third speech recognition result are generated respectively. By comparing the pronunciation information of the domain keyword in the third speech recognition result and the pronunciation information of the domain keyword in the domain keyword set in the service scenario to which the speech to be recognized belongs, it is determined whether the domain keyword in the third speech recognition result matches any domain keyword in the domain keyword set in the service scenario to which the speech to be recognized belongs.

If the domain keyword in the third speech recognition result matches any domain keyword in the domain keyword set in the service scenario to which the speech to be recognized belongs, a new path is expanded between the left and right nodes of the slot where the domain keyword in the third speech recognition result is located, and the category label corresponding to the service scenario to which the speech to be recognized belongs is stored on the new path.

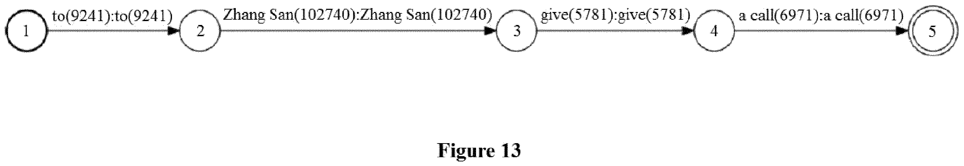

Exemplarily, as shown in Figure 13, which is a schematic diagram of a state lattice of the speech recognition result "<s>give a phone to Zhang San</s>" in a call service scenario.

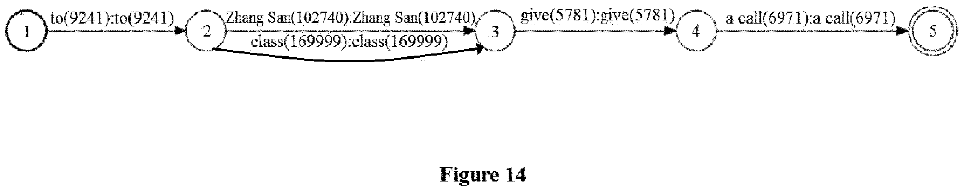

For the personal name "Zhang San" in the speech recognition result, when it is determined through pronunciation matching that the personal name "Zhang San" matches "Zhang San" in the address book uploaded by the user, a new path is expanded between the left and right nodes of the slot where "Zhang San" is located in the state lattice shown in Figure 13. The new path shares the start node and end node with "Zhang San" in the original state lattice, and the category label "class" corresponding to the current service scenario is labeled on the new path. Specifically, the "class" may be specifically a "personal name", and the state lattice after path expansion is as shown in Figure 14.

According to the above processing, after the path extension of the third speech recognition result is performed, the third speech recognition result and a language model score for the expanded path of the third speech recognition result are determined respectively, based on the recognition result of the training corpus by the clustering language model corresponding to the category label of the service scenario to which the speech to be recognized belongs.

Specifically, the recognition result of the training corpus by the clustering language model includes the N-gram language model probability of each word in the recognition result, and the probability is a language score of the word.

After performing the path expansion of the third speech recognition result, the clustering language model corresponding to the third speech recognition result is selected to re-check language model scores of the third speech recognition result and the expanded path of the third speech recognition result, and the language model scores of the third speech recognition result and the expanded path of the third speech recognition result are determined respectively.

In the embodiment of the present disclosure, since the general speech recognition model and the scenario customization model are trained based on different corpora, these two models correspond to different clustering class language models. The speech recognition decoding network and the scenario customization model belong to field related models, thus share the same clustering class language model. Therefore, when the score of the speech recognition result is re-checked, different clustering language models is adapted according to the model for obtaining the speech recognition result, so as to re-check the store of the speech recognition result.

In particular, when the language model incentive solution is used to perform the language model incentive on the candidate speech recognition result selected from the first speech recognition result and the second speech recognition result, since the candidate speech recognition may be a result outputted by the speech recognition decoding network (that is, any one or more of the first speech recognition results), or result outputted by the general speech recognition model (that is, one or more of the second speech recognition results), based on the source of the candidate speech recognition result, a clustering language model of the same type as the source is selected for re-checking the scores.

The model structures of the different types of clustering language models are the same, the difference is that the training corpora are different. For example, the clustering language model that is the same type as the general speech recognition model is obtained based on massive corpus training, and is referred to as a model A, and the clustering language model that is the same type as the scenario customization model is obtained based on scenario corpus training, and is referred to as a model B. Since the model A and the model B are trained based on different types of training corpus, they belong to different types of clustering language models. The clustering language model that is the same type as the speech recognition decoding network is also trained based on scenario corpus, and is referred to as a model C. Since the model B and the model C are trained based on the same type of training corpus, they belong to the same type of clustering language model.

Table 1 shows a calculation way of re-checking the scores of the two paths in Figure 14.

Table 1

| Recognition result | Calculation of the scores |
|---|---|
| <s> give a phone call to Zhang San </s> | Score A = p(<s>) + p (give \| <s>) + p(Zhang San \| <s> to) + p(give \|<s> to Zhang San) + p( phone call \|to Zhang San) + p(</s> \| Zhang San give a phone call) |
| <s> give a phone call to class</s> | Score B = p(<s>) + p (give I <s>) + p(class \| <s> to) + p(give \|<s> to class) + p ( phone call \|to class) + p(</s> \| class give a phone call) |

According to the above description, with reference to Table 1, the language model score A of the third speech recognition result and the language model score B of the expanded path of the third speech recognition result can be determined.

Finally, based on the language model score of the third speech recognition result and the language model score of the expanded path of the third speech recognition result, the language score of the third speech recognition result after the language model incentive is determined.

Specifically, the language model score A of the third speech recognition result and the language model score B of the expanded path of the third speech recognition result are combined according to a certain ratio, and the sum of the combining coefficients of the two is 1. Then, the language score of the third speech recognition result after the language model incentive is obtained.

For example, the language score of the third speech recognition result after the language model incentive may be calculated according to the following equation:

$$Score = \gamma * scoreA + (1 - \gamma) * scoreB$$

where $\gamma$ represents an empirical coefficient, a value of which is determined through testing. Specifically, the value of the empirical coefficient is determined with a goal of obtaining the correct language score and then selecting a correct speech recognition result from numerous speech recognition results based on the language score competition.

The above embodiments describe the specific implementations of the acoustic score incentive and language model incentive. In the above implementations, especially in the implementation of acoustic score incentive, the problem of false triggering of domain keyword is fully considered. By setting the incentive coefficient reasonably, the problems of false triggering caused by incentive when the pronunciation of domain keyword and real result is similar and false triggering caused by a large difference between the pronunciation of the domain keyword and real result can be solved.

As mentioned in the above embodiment, the problem of false triggering caused by the same pronunciation of the domain keyword and real result cannot be solved by the solution of controlling the incentive coefficient. The reason is that the speech recognition decoding network constructed in the embodiment of the present disclosure is a sentence network relying on the acoustic model, which does not contain language information, so the problem caused by the situation that the domain keyword and the real result have the same pronunciation cannot be essentially solved. In order to reduce the impact of such false triggering, the result is presented to the user in the form of multiple candidates according to the embodiment of the present disclosure.

Specifically, since the general speech recognition model and speech recognition decoding network share the same acoustic model, when their output results have the same pronunciation, their acoustic scores are the same. Therefore, when the acoustic scores of the first speech recognition result outputted by the speech recognition decoding network and the second speech recognition result outputted by the general speech recognition model are the same, the first speech recognition result and the second speech recognition result are jointly used as the final speech recognition result, that is, the first speech recognition result and the second speech recognition result are simultaneously outputted, and the user can select the correct speech recognition result. The output order when the first speech recognition result and the second speech recognition result are simultaneously outputted can be flexibly adjusted, and preferably, the first speech recognition result and the second speech recognition result are outputted in the order that the first speech recognition result is outputted first and then the second speech recognition result is outputted.

It should be noted that the above idea of outputting speech recognition results in multiple candidate forms is also applicable to score competition of speech recognition results of more models. For example, as described in the above embodiment, when scores of the outputted results of the speech recognition decoding network, the general speech recognition model, and the scenario customization model are compared to determine the final speech recognition result, if multiple different speech recognition results have the same score, these speech recognition results with the same score are outputted simultaneously, and the user selects a correct speech recognition result.

In the above embodiments of the present disclosure, the processing of the proposed speech recognition methods, especially the typical steps in various speech recognition methods are respectively described in detail. It should be noted that, in order to make the description concise, the specific implementations of the same or corresponding processing steps in various speech recognition methods may be referred to each other, and the embodiments of the present disclosure dose not list and describe them one by one. The processing steps in each speech recognition method may be used for reference and combined to form a technical solution that does not exceed the protection scope of the present disclosure.

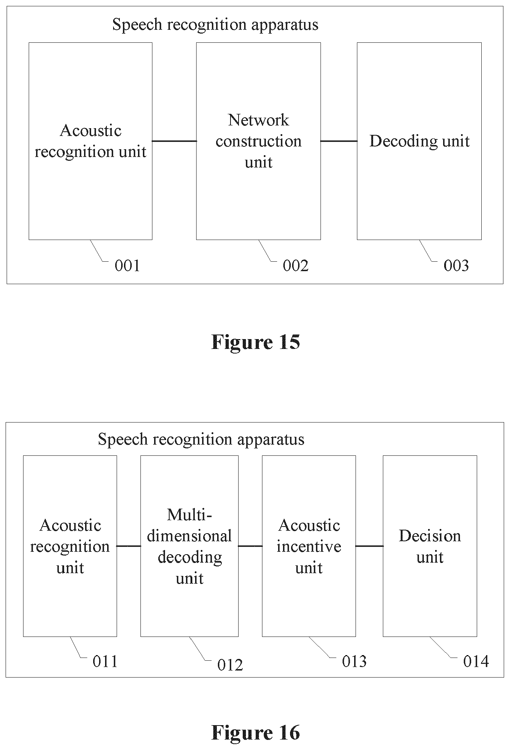

In addition, corresponding to the above speech recognition method, a speech recognition apparatus is further provided according to the embodiment of the present disclosure, as shown in Figure 15. The speech recognition apparatus includes an acoustic recognition unit 001, a network construction unit 002 and a decoding unit 003. The acoustic recognition unit 001 is configured to obtain the acoustic state sequence of the speech to be recognized. The network construction unit 002 is configured to construct a speech recognition decoding network based on the domain keyword set and a sentence pattern decoding network that are in a scenario to which the speech to be recognized belongs, where the sentence pattern decoding network is constructed at least by performing sentence pattern induction on a text corpus in the scenario to which the speech to be recognized belongs. The decoding unit 003 is configured to decode the acoustic state sequence based on the speech recognition decoding network, to obtain a speech recognition result.

In an embodiment, the constructing a speech recognition decoding network based on the domain keyword set and a sentence pattern decoding network that are in the scenario to which the speech to be recognized belongs includes: transmitting the domain keyword set in the scenario to which the speech to be recognized belongs to a cloud server, construct the speech recognition decoding network by the cloud server based on the domain keyword set and the sentence pattern decoding network that are in the service scenario to which the speech to be recognized belongs.

In an embodiment, the speech recognition result is used as the first speech recognition result. The decoding unit 003 is further configured to: decode the acoustic state sequence by using a general speech recognition model to obtain a second speech recognition result; and determine a final speech recognition result at least from the first speech recognition result and the second speech recognition result.

In an embodiment, the decoding unit 003 is further configured to: decode the acoustic state sequence through a pre-trained scenario customization model to obtain a third speech recognition result, where the scenario customization model is obtained by performing speech recognition training on speeches in the scenario to which the speech to be recognized belongs. The determining a final speech recognition result at least from the first speech recognition result and the second speech recognition result includes: determining the final speech recognition result from the first speech recognition result, the second speech recognition result and the third speech recognition result.

In an embodiment, the determining the final speech recognition result from the first speech recognition result, the second speech recognition result and the third speech recognition result includes: performing language model incentive on the first speech recognition result, the second speech recognition result, and the third speech recognition result; determining a final speech recognition result from the first speech recognition result, the second speech recognition result and the third speech recognition result based on language scores of the first speech recognition result, the second speech recognition result and the third speech recognition result after the language model incentive.

In an embodiment, the determining a final speech recognition result from the first speech recognition result, the second speech recognition result and the third speech recognition result includes: performing an acoustic score incentive on the first speech recognition result, and performing a language model incentive on the third speech recognition result; determining a candidate speech recognition result from the first speech recognition result and the second speech recognition result based on an acoustic score of the first speech recognition result after the acoustic score incentive and an acoustic score of the second speech recognition result; performing the language model incentive on the candidate speech recognition result; and determining the final speech recognition from the candidate speech recognition result and the third speech recognition result based on an language score of the candidate speech recognition result after the language model incentive, and the language score of the third speech recognition result after the language model incentive.

A speech recognition apparatus is further provided according to another embodiment of the present disclosure, as shown in Figure 16. The apparatus includes: an acoustic recognition unit 011, a multi-dimensional decoding unit 012, an acoustic incentive unit 013 and a decision unit 014. The acoustic recognition unit 011 is configured to obtain an acoustic state sequence of a speech to be recognized. The multi-dimensional decoding unit 012 is configured to decode the acoustic state sequence with a speech recognition decoding network to obtain a first speech recognition result, and decode the acoustic state sequence with a general speech recognition model to obtain a second speech recognition result, where the speech recognition decoding network is constructed based on the domain keyword set and the sentence pattern decoding network that are in the scenario to which the speech to be recognized belongs. The acoustic incentive unit 013 is configured to perform acoustic score incentive on the first speech recognition result. The decision unit 014 is configured to determine a final speech recognition result at least from the first speech recognition result after incentive and the second speech recognition result.

In an embodiment, the multi-dimensional decoding unit 012 is further configured to: decode the acoustic state sequence by a pre-trained scenario customization model to obtain a third speech recognition result, where the scenario customization model is obtained by performing speech recognition training on speeches in the scenario to which the speech to be recognized belongs. The determining a final speech recognition result at least from the first speech recognition result after incentive and the second speech recognition result includes: determining the final speech recognition result from the first speech recognition result after incentive, the second speech recognition result and the third speech recognition result.

In an embodiment, the determining the final speech recognition result from the first speech recognition result after incentive, the second speech recognition result and the third speech recognition result includes: determining a candidate speech recognition result from the first speech recognition result and the second speech recognition result based on the acoustic score of the first speech recognition result after the acoustic score incentive and the acoustic score of the second speech recognition result; performing language model incentive on the candidate speech recognition result and the third speech recognition result; determining the final speech recognition result from the candidate speech recognition result and the third speech recognition result based on the language score of the candidate speech recognition result after the language model incentive and the language score of the third speech recognition result after the language model incentive.

In an embodiment, the sentence pattern decoding network in the scenario to which the speech to be recognized belongs is constructed through the following steps: constructing a text sentence pattern network by performing sentence induction and grammar slot definition on corpus data in the scenario to which the speech to be recognized belongs, where the text sentence pattern network includes an ordinary grammar slot corresponding to the non-domain keyword and a replaceable grammar slot corresponding to the domain keyword, and a placeholder corresponding to the domain keyword is stored in the replaceable grammar slot; performing word segmentation on an entry in the ordinary grammar slot of the described text sentence pattern network and performing word node expansion according to the word segmentation result, to obtain a word-level sentence pattern decoding network; and replacing each word in the ordinary grammar slot of the word-level sentence pattern decoding network with a corresponding pronunciation, expanding the pronunciation node according to the pronunciation corresponding to the word, to obtain the pronunciation-level sentence pattern decoding network, where the pronunciation-level sentence pattern decoding network serves as a sentence pattern decoding network in the scenario to which the speech to be recognized belongs.

In an embodiment, the performing word segmentation on an entry in the ordinary grammar slot of the text sentence pattern network and performing word node expansion according to the word segmentation result to obtain a word-level sentence pattern decoding network includes: performing word segmentation to each entry of the ordinary grammar slot in the text sentence pattern network separately, to obtain words corresponding to each entry; expanding the word node based on each word corresponding to the same entry, to obtain a word string corresponding to the entry; and connecting word strings of entries corresponding to the same ordinary grammar slot in parallel, to obtain a word-level sentence pattern decoding network.

In an embodiment, the replacing each word in the ordinary grammar slot of the word-level sentence pattern decoding network with a corresponding pronunciation, expanding a pronunciation node according to the pronunciation corresponding to the word, to obtain a pronunciation-level sentence pattern decoding network includes: replacing each word in the ordinary grammar slot of the word-level sentence pattern decoding network with a corresponding pronunciation; and dividing the pronunciation unit for each pronunciation in the word-level sentence pattern decoding network, expanding the pronunciation node based on a pronunciation unit corresponding to the pronunciation, to obtain a pronunciation-level sentence pattern decoding network.

In an embodiment, the constructing a speech recognition decoding network based on the domain keyword set and the sentence pattern decoding network that are in the scenario to which the speech to be recognized belongs includes: obtaining a pre-constructed sentence pattern decoding network in the scenario to which the speech to be recognized belongs; constructing a domain keyword network based on domain keywords in the domain keyword set in the scenario to which the speech to be recognized belongs; and inserting the domain keyword network into the sentence pattern decoding network to obtain a speech recognition decoding network.

In an embodiment, the constructing a domain keyword network based on domain keywords in the domain keyword set in the scenario to which the speech to be recognized belongs includes: constructing a word-level domain keyword network based on the domain keywords in the domain keyword set in the scenario to which the speech to be recognized belongs; and replacing each word in the word-level domain keyword network with a corresponding pronunciation, and expanding a pronunciation node according to the pronunciation corresponding to the word, to obtain the pronunciation-level domain keyword network.

In an embodiment, the domain keyword network and the sentence pattern decoding network each includes nodes and directed arcs connecting the nodes, and pronunciation information or a placeholder is stored on the directed arc between the nodes. The inserting the domain keyword network into the sentence pattern decoding network to obtain a speech recognition decoding network includes: constructing the speech recognition decoding network by connecting the domain keyword network with the left and right nodes of the replaceable grammar slot of the sentence pattern decoding network through the directed arcs.

In an embodiment, the constructing the speech recognition decoding network by connecting the domain keyword network with the left and right nodes of the replaceable grammar slot of the sentence pattern decoding network through the directed arcs includes: constructing the speech recognition decoding network by connecting a right node of each outgoing arc of the start node of the domain keyword network with a left node of the replaceable grammar slot through a directed arc, and connecting a left node of each incoming arc of the end node of the domain keyword network with a right node of the replaceable grammar slot through a directed arc.

In an embodiment, a first arc and a last arc of each keyword in the domain keyword network stores a unique identifier corresponding to the keyword. The constructing the speech recognition decoding network by connecting a right node of each outgoing arc of the start node of the domain keyword network with a left node of the replaceable grammar slot through a directed arc, and connecting a left node of each incoming arc of the end node of the domain keyword network with a right node of the replaceable grammar slot through a directed arc includes: traversing each outgoing arc of the start node of the domain keyword network, and for each traversed outgoing arc, determining whether a keyword corresponding to a unique identifier is inserted into the sentence pattern decoding network based on the unique identifier on the outgoing arc and the network-in keyword information set, where the network-in keyword information set stores the unique identifier of the inserted keyword in the sentence pattern decoding network, and the numbers of the left and right nodes of the directed arc where the unique identifier is located; if the keyword corresponding to the unique identifier is not inserted into the sentence pattern decoding network, connecting the right node of the traversed outgoing arc to the left node of the replaceable grammar slot through a directed arc, where pronunciation information on the traversed outgoing arc is stored on the directed arc; and traversing each incoming arc of the end node of the domain keyword network, and for each traversed incoming arc, determining whether a keyword corresponding to a unique identifier is inserted into the sentence pattern decoding network based on the unique identifier on the incoming arc and the network-in keyword information set; and if the keyword corresponding to the unique identifier is not inserted into the sentence pattern decoding network, connecting the left node of the traversed incoming arc to the right node of the replaceable grammar slot through a directed arc, where the traversed pronunciation information on the incoming arc is stored on the directed arc.

In an embodiment, the constructing the speech recognition decoding network by connecting a right node of each outgoing arc of the start node of the domain keyword network with a left node of the replaceable grammar slot through a directed arc, and connecting a left node of each incoming arc of the end node of the domain keyword network with a right node of the replaceable grammar slot through a directed arc further includes: storing the unique identifier of a keyword, and the numbers of the left and right nodes of the directed arc where the unique identifier is located in the sentence pattern decoding network in a case that the keyword in the domain keyword network is inserted into the sentence pattern decoding network.

In an embodiment, the constructing the speech recognition decoding network by connecting a right node of each outgoing arc of the start node of the domain keyword network with a left node of the replaceable grammar slot through a directed arc, and connecting a left node of each incoming arc of the end node of the domain keyword network with a right node of the replaceable grammar slot through a directed arc further includes: traversing each unique identifier in the network-in keyword information set; if the unique identifier traversed is not the unique identifier of a keyword in the domain keyword set in the scenario to which the speech to be recognized belongs, disconnecting the directed arc between the left and right nodes corresponding to the unique identifier.

In an embodiment, the above speech recognition apparatus further includes a result correcting unit. The result correcting unit is configured to correct the first speech recognition result based on the second speech recognition result.

In an embodiment, correcting the first speech recognition result according to the second speech recognition result includes: correcting the non-domain keyword content in the first speech recognition result based on the reference text content in the second speech recognition result to obtain the corrected first speech recognition result, where the reference text content is a text content in the second speech recognition result that matches the non-domain keyword content in the first speech recognition result.

In an embodiment, the correcting the non-domain keyword content in the first speech recognition result based on the reference text content in the second speech recognition result to obtain the corrected first speech recognition result includes: determining the domain keyword content and non-domain keyword content from the first speech recognition result, and determining the text content corresponding to the non-domain keyword content from the second speech recognition result as the reference text content; determining the corrected non-domain keyword content based on the reference text content in the second speech recognition result and the non-domain keyword content in the first speech recognition result; and combining the corrected non-domain keyword content with the domain keyword content to obtain the corrected first speech recognition result.

In an embodiment, the determining the reference text content corresponding to the non-domain keyword content in the first speech recognition result from the second speech recognition result as the reference text content includes: determining an edit distance matrix between the first speech recognition result and the second speech recognition result based on an edit distance algorithm; and determining the text content corresponding to the non-domain keyword content in the first speech recognition result from the second speech recognition result as the reference text content based on the edit distance matrix and the non-domain keyword content in the first speech recognition result.

In an embodiment, the determining the corrected non-domain keyword content based on the reference text content in the second speech recognition result and the non-domain keyword content in the first speech recognition result includes: determining the target text content in the second speech recognition result or the non-domain keyword content in the first speech recognition result as the corrected non-domain keyword content based on the difference of characters between the reference text content in the second speech recognition result and the non-domain keyword content in the first speech recognition result, where the target text content in the second speech recognition result refers to a text content in the second speech recognition result that corresponds to a position of the non-domain keyword content in the first speech recognition result.

In an embodiment, the determining the target text content in the second speech recognition result or the non-domain keyword content in the first speech recognition result as the corrected non-domain keyword content based on the character difference between the reference text content in the second speech recognition result and the non-domain keyword content in the first speech recognition result includes: comparing the reference text content in the second speech recognition result with the non-domain keyword content in the first speech recognition result, and determining whether the reference text content in the second speech recognition result is the same as the non-domain keyword content in the first speech recognition result; determining the target text content in the second speech recognition result as the corrected non-domain keyword content if the reference text content in the second speech recognition result is the same as the non-domain keyword content in the first speech recognition result; determining whether the number of characters of the second speech recognition result is greater than that of the non-domain keyword content in the first speech recognition result and whether the difference in the number of characters between the second speech recognition result and the non-domain keyword content in the first speech recognition result is less than or equal to a set threshold if the reference text content in the second speech recognition result is different from the non-domain keyword content in the first speech recognition result; determining the target text content in the second speech recognition result as the corrected non-domain keyword content if the number of characters of the second speech recognition result is greater than that of the non-domain keyword content in the first speech recognition result and the difference in the number of characters between the second speech recognition result and the non-domain keyword content in the first speech recognition result is less than or equal to the set threshold; and determining the non-domain keyword content in the first speech recognition as the corrected non-domain keyword content if the number of characters of the non-domain keyword content in the second speech recognition result is less than that of the first speech recognition result, and/or the difference in the number of characters between the second speech recognition result and the non-domain keyword content in the first speech recognition result is greater than the set threshold.

In an embodiment, the determining the final speech recognition result at least from the first speech recognition result and the second speech recognition result includes: determining a matching degree between the first speech recognition result and the second speech recognition result by comparing the first speech recognition result with the second speech recognition result, and determining a confidence level of the first speech recognition result based on the matching degree between the first speech recognition result and the second speech recognition result; determining the final speech recognition result from the first speech recognition result and the second speech recognition result based on the acoustic score of the first speech recognition result and the acoustic score of the second speech recognition result in a case that the confidence level of the first speech recognition result is greater than the preset confidence level threshold; and performing an acoustic score incentive on the first speech recognition result in a case that the confidence level of the first speech recognition result is less than or equal to the preset confidence level threshold, and determining the final speech recognition result from the first speech recognition result and the second speech recognition result based on the acoustic score of the first speech recognition result after incentive and the acoustic score of the second speech recognition result.

In an embodiment, the determining the confidence level of the first speech recognition result based on the matching degree between the first speech recognition result and the second speech recognition result includes: determining whether the matching degree between the first speech recognition result and the second speech recognition result is greater than a set matching degree threshold; calculating the confidence level of the first speech recognition result based on the acoustic scores of frames of the first speech recognition result in a case that the matching degree between the first speech recognition result and the second speech recognition result is greater than the set matching degree threshold; constructing a decoding network based on the domain keyword content in the first speech recognition result and the second speech recognition result, decoding the acoustic state sequence again based on the decoding network, and updating the first speech recognition result based on the decoding result, in a case that the matching degree between the first speech recognition result and the second speech recognition result is less than or equal to the set matching degree threshold; and calculating the confidence level of the first speech recognition result based on the updated acoustic scores of the frames of the first speech recognition result.

In an embodiment, in a case that the acoustic scores of the first speech recognition result and the second speech recognition result are the same, both the first speech recognition result and the second speech recognition result are determined as the final speech recognition result.

In an embodiment, the performing the acoustic score incentive on the first speech recognition result includes: determining an acoustic incentive coefficient at least based on the domain keyword content and the non-domain keyword content in the first speech recognition result; updating the acoustic score of the domain keyword content in the first speech recognition result based on the acoustic incentive coefficient; recalculating the acoustic score of the first speech recognition result based on the updated acoustic score of the domain keyword content in the first speech recognition result and the acoustic score of the non-domain keyword content in the first speech recognition result.

In an embodiment, the determining an acoustic incentive coefficient at least based on the domain keyword content and the non-domain keyword content in the first speech recognition result includes: calculating the acoustic incentive coefficient based on the priori coefficient of the acoustic score incentive in the scenario to which the speech to be recognized belongs, the number of characters and phonemes of the domain keyword in the first speech recognition result, and the total number of characters and phonemes of the first speech recognition result.

In an embodiment, the determining an acoustic incentive coefficient at least based on the domain keyword content and the non-domain keyword content in the first speech recognition result includes: calculating the score confidence level of the domain keyword content in the speech recognition result based on the number of phonemes and the acoustic score of the domain keyword content in the first speech recognition result, and the number of phonemes and the acoustic score of the non-domain keyword content in the first speech recognition result; determining the acoustic incentive coefficient at least based on the score confidence level of the domain keyword content in the first speech recognition result.

In an embodiment, the determining the acoustic incentive coefficient at least based on the score confidence level of the domain keyword content in the first speech recognition result includes: determining the acoustic incentive coefficient based on the score confidence level of the domain keyword content in the first speech recognition result, and the relationship between the predetermined acoustic incentive coefficient and the recognition effect and recognition false triggering.

In an embodiment, the performing language model incentive on the third speech recognition result includes: expanding the path of the third speech recognition result based on the domain keyword set in the scenario to which the speech to be recognized belongs and the category label corresponding to the scenario, where the category label is obtained by clustering speech recognition scenarios; determining the language model score of the third speech recognition result and the language model score of the expanded path in the third speech recognition result based on the recognition result of the clustering language model corresponding to the category label on the training corpus, where the clustering language model is obtained by performing speech recognition training on the target corpus, and the domain keyword in the target corpus is replaced with the category label; and determining the language score of the third speech recognition result after the language model incentive based on the language model score of the third speech recognition result and the language model score of the expanded path of the third speech recognition result.

In an embodiment, the expanding the path of the third speech recognition result based on the domain keyword set in the scenario to which the speech to be recognized belongs and the category label corresponding to the scenario includes: comparing the domain keyword in the third speech recognition result with the domain keyword in the domain keyword set in the scenario to which the speech to be recognized belongs; and expanding a new path between the left and right nodes of the slot where the domain keyword is located in the third speech recognition result in a case that the domain keyword in the third speech recognition result matches any domain keyword in the domain keyword set, and storing the category label corresponding to the scenario to which the speech to be recognized belongs on the new path.

Specifically, specific operation of each unit in the above embodiments of each speech recognition apparatus may be referred to the processing of the corresponding steps of the speech recognition method, which is not repeated here.

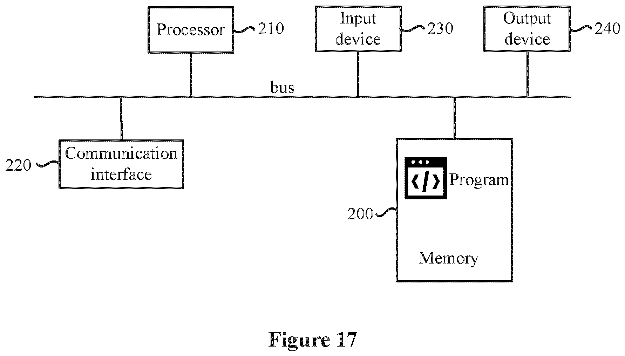

A speech recognition device is further provided according to an embodiment of the present disclosure, as shown in Figure 17. The device includes: a memory 200 and a processor 210. The memory 200 is connected to the processor 210 and is configured to store a program; the processor 210 is configured to execute the program stored in the memory 200 to implement the speech recognition method in any of the above embodiments.

Specifically, the above speech recognition device may further include: a bus, a communication interface 220, an input device 230 and an output device 240. The processor 210, the memory 200, the communication interface 220, the input device 230 and the output device 240 are connected to each other through the bus. The bus may include a pathway that transmits information between various components of a computer system. The processor 210 may be a general-purpose processor, such as a general-purpose central processing unit (CPU), a microprocessor, and may also be an application-specific integrated circuit (ASIC), or one or more integrated circuits for controlling the execution of the program for the solution of the present disclosure. The processor 210 may also be a digital signal processor (DSP), an application specific integrated circuit (ASIC), an off-the-shelf programmable gate array (FPGA) or other programmable logic devices, discrete gate or transistor logic devices, and discrete hardware components. The processor 210 may include a main processor, and may also include a baseband chip, a modem, and the like.

The memory 200 stores the program for executing the technical solution of the present disclosure, and an operating system and other key services. Specifically, the program may include program codes, and the program codes include computer operation instructions. More specifically, the memory 200 may include a read-only memory (ROM), other types of static storage devices that may store static information and instructions, a random-access memory (RAM), other types of dynamic storage devices, disk storage, flash, and the like that may store information and instructions.

The input device 230 may include a device for receiving data and information input by a user, such as a keyboard, a mouse, a camera, a scanner, a light pen, a voice input device, a touch screen, a pedometer and a gravity sensor.

The output device 240 may include a device that outputs information to a user, such as a display screen, a printer, a speaker.

The communication interface 220 may include a device using any transceiver or the like to communicate with other devices or communication networks, such as Ethernet, radio access network (RAN), wireless local area network (WLAN).

The processor 2102 executes the program stored in the memory 200, and calls other devices, to implement various steps of the speech recognition method according to the embodiment of the present disclosure.

A storage medium is further provided according to an embodiment of the present disclosure, on which a computer program is stored. The computer program, when run by a processor, performs the steps of the speech recognition method according to any of the above embodiments.

Specifically, the specific operation of each part of the speech recognition device, and the specific processing of the computer program on the storage medium when it is run by the processor, may be referred to the content of each embodiment of the speech recognition method, which is not repeated here.

For the sake of simple description, the method embodiments are expressed as a series of action combinations, but those skilled in the art should know that the present disclosure is not limited by the described action sequence. According to the present disclosure, certain steps may be performed in other orders or simultaneously. In addition, those skilled in the art should also know that the embodiments described in the specification are preferred embodiments, and the actions and modules involved are not necessarily required by the present disclosure.

The embodiments in this specification are described in a progressive manner, each embodiment focuses on a difference from other embodiments, and the same and similar parts of the embodiments can be referred to each other. As the apparatus embodiments are basically similar to the method embodiments, the description is relatively simple, and related parts may be referred to part of the description of the method embodiments.

The steps in the method of each embodiment of the present disclosure may be adjusted, combined and deleted according to actual needs, and the technical features recorded in each embodiment may be replaced or combined.

The modules and sub-modules in the apparatus and terminals in the various embodiments of the present disclosure may be combined, divided and deleted according to actual needs.

In the several embodiments of the present disclosure, it should be understood that the disclosed terminal, apparatus and method may be implemented in other ways. For example, the embodiments of the terminal described above are only illustrative. For example, the division of modules or sub-modules is only a logical function division. In actual implementation, there may be other division methods. For example, multiple sub-modules or modules can be combined or integrated into another module, or some features can be ignored, or not implemented. In addition, the mutual coupling or direct coupling or communication connection shown or discussed may be through the indirect coupling or communication connection of some interfaces, devices or modules, and may be in electrical, mechanical or other forms.

The modules or sub-modules described as separate components may or may not be physically separated, and the components as modules or sub-modules may or may not be physical modules or sub-modules, that is, they may be located in one place, or may also be distributed on multiple network modules or sub-modules. Part or all of the modules or sub-modules can be selected according to actual needs to achieve the purpose of the solution of this embodiment.

In addition, each functional module or sub-module in each embodiment of the present disclosure may be integrated into one processing module, or each module or sub-module may exist separately in a physical form, or two or more modules or sub-modules may be integrated in one processing module. The integrated modules or sub-modules can be implemented in the form of hardware or in the form of software function modules or sub-modules.

Professionals may further realize that the units and algorithm steps of the examples described in conjunction with the embodiments disclosed herein can be implemented by electronic hardware, computer software or a combination of the two. In order to clearly illustrate the possibility for interchangeability between hardware and software, in the above description, the composition and steps of each example are generally described according to their functions. Whether these functions are executed by hardware or software depends on the specific application and design constraints of the technical solution. Those skilled in the art may use different methods to implement the described functions for each specific application, but such implementation should not be regarded as exceeding the scope of the present disclosure.

The steps of the methods or algorithms described in conjunction with the embodiments disclosed herein may be directly implemented by hardware, software unit executed by a processor, or a combination of the two. The software unit may be placed in a random-access memory (RAM), an internal memory, a read-only memory (ROM), an electrically programmable ROM, an electrically erasable programmable ROM, a register, a hard disk, a removable disk, a CD-ROM, or any other storage medium known in the technical field.

Finally, it should also be noted that in this text, relational terms such as first and second are only used to distinguish one entity or operation from another, and do not necessarily require or imply that any such actual relationship or order exists in these entities or operations. Furthermore, the term "comprise", "include" or any other variation thereof is intended to cover a non-exclusive inclusion, so that a process, method, article, or apparatus comprising a set of elements includes not only those elements, but also other elements not expressly listed or elements inherent in such a process, method, article, or device. Without further limitations, an element defined by the phrase "comprising/including a ..." does not exclude the presence of additional identical elements in the process, method, article or device including the element.

The above description of the disclosed embodiments is provided to enable any person skilled in the art to realize or use the present disclosure. Various modifications to these embodiments are readily apparent to those skilled in the art, and the general principles defined herein may be implemented in other embodiments without departing from the spirit or scope of the present disclosure. Therefore, the present disclosure is not limited to the embodiments shown herein, but is to be accorded the widest scope consistent with the principles and novel features disclosed herein.

**Claims**

1. A speech recognition method, comprising:

   obtaining an acoustic state sequence of a speech to be recognized;
   constructing a speech recognition decoding network based on a domain keyword set and a sentence pattern decoding network that are in a scenario to which the speech to be recognized belongs, wherein the sentence pattern decoding network is constructed at least by performing sentence pattern induction on a text corpus in the scenario to which the speech to be recognized belongs; and
   decoding the acoustic state sequence by the speech recognition decoding network to obtain a speech recognition result.

2. The method according to claim 1, wherein the constructing a speech recognition decoding network based on a domain keyword set and a sentence pattern decoding network that are in a scenario to which the speech to be recognized belongs comprises:
   transmitting the domain keyword set in the scenario to which the speech to be recognized belongs to a cloud server to construct the speech recognition decoding network by the cloud server based on the domain keyword set and the sentence pattern decoding network that are in the scenario to which the speech to be recognized belongs.

3. The method according to claim 1, wherein the speech recognition result is determined as a first speech recognition result, and the method further comprises:

   decoding the acoustic state sequence by a general speech recognition model to obtain a second speech recognition result; and
   determining a final speech recognition result at least from the first speech recognition result and the second speech recognition result.

4. The method according to claim 3, further comprising:

   decoding the acoustic state sequence by a pre-trained scenario customization model to obtain a third speech recognition result; wherein the scenario customization model is obtained by performing speech recognition training on speeches in the scenario to which the speech to be recognized belongs, wherein
   the determining a final speech recognition result at least from the first speech recognition result and the second speech recognition result comprises:
   determining the final speech recognition result from the first speech recognition result, the second speech recognition result and the third speech recognition result.

5. The method according to claim 4, wherein the determining the final speech recognition result from the first speech recognition result, the second speech recognition result and the third speech recognition result comprises:

   performing a language model incentive on the first speech recognition result, the second speech recognition result, and the third speech recognition result; and

determining the final speech recognition result from the first speech recognition result, the second speech recognition result and the third speech recognition result, based on a language score of the first speech recognition result, a language score of the second speech recognition result and a language score of the third speech recognition result after the language model incentive.

6. The method according to claim 4, wherein the determining a final speech recognition result from the first speech recognition result, the second speech recognition result and the third speech recognition result comprises:

performing an acoustic score incentive on the first speech recognition result, and performing a language model incentive on the third speech recognition result;

determining, based on an acoustic score of the first speech recognition result after the acoustic score incentive and an acoustic score of the second speech recognition result, a candidate speech recognition result from the first speech recognition result and the second speech recognition result;

performing the language model incentive on the candidate speech recognition result; and

determining the final speech recognition from the candidate speech recognition result and the third speech recognition result based on the language score of the candidate speech recognition result after the language model incentive and the language score of the third speech recognition result after the language model incentive.

7. A speech recognition method, comprising:

obtaining an acoustic state sequence of a speech to be recognized;

decoding the acoustic state sequence by a speech recognition decoding network to obtain a first speech recognition result, and decoding the acoustic state sequence by a general speech recognition model to obtain a second speech recognition result, wherein the speech recognition decoding network is constructed based on a domain keyword set and a sentence pattern decoding network that are in a scenario to which the speech to be recognized belongs;

performing an acoustic score incentive on the first speech recognition result; and

determining a final speech recognition result at least from the first speech recognition result after the acoustic score incentive and the second speech recognition result.

8. The method according to claim 7, further comprising:

decoding the acoustic state sequence by a pre-trained scenario customization model to obtain a third speech recognition result, wherein the scenario customization model is obtained by performing a speech recognition training on a speech in the scenario to which the speech to be recognized belongs, wherein

the determining a final speech recognition result at least from the first speech recognition result after the acoustic score incentive and the second speech recognition result comprises:

determining the final speech recognition result from the first speech recognition result after the acoustic score incentive, the second speech recognition result and the third speech recognition result.

9. The method according to claim 8, wherein the determining the final speech recognition result from the first speech recognition result after the acoustic score incentive, the second speech recognition result and the third speech recognition result comprises:

determining a candidate speech recognition result from the first speech recognition result and the second speech recognition result based on an acoustic score of the first speech recognition result after the acoustic score incentive and an acoustic score of the second speech recognition result;

performing a language model incentive on the candidate speech recognition result and the third speech recognition result; and

determining the final speech recognition result from the candidate speech recognition result and the third speech recognition result based on a language score of the candidate speech recognition result after the language model incentive and a language score of the third speech recognition result after the language model incentive.

10. The method according to any one of claims 1 to 9, wherein the sentence pattern decoding network in the scenario to which the speech to be recognized belongs is constructed through the following steps:

constructing a text sentence pattern network by performing sentence induction and grammar slot definition on corpus data in the scenario to which the speech to be recognized belongs, wherein the text sentence pattern network comprises an ordinary grammar slot corresponding to a non-domain keyword and a replaceable grammar slot corresponding to a domain keyword, and the replaceable grammar slot stores a placeholder corresponding to the domain keyword;

performing word segmentation on an entry in the ordinary grammar slot of the described text sentence pattern network and performing word node expansion based on a result of the word segmentation, to obtain a word-level sentence pattern decoding network; and

replacing a word in the ordinary grammar slot of the word-level sentence pattern decoding network with a corresponding pronunciation and expanding a pronunciation node based on the corresponding pronunciation of the word, to obtain a pronunciation-level sentence pattern decoding network, wherein the pronunciation-level sentence pattern decoding network serves as a sentence pattern decoding network in the scenario to which the speech to be recognized belongs.

11. The method according to any one of claims 1 to 9, wherein the constructing a speech recognition decoding network based on a domain keyword set and a sentence pattern decoding network that are in a scenario to which the speech to be recognized belongs comprises:

obtaining a pre-constructed sentence pattern decoding network in the scenario to which the speech to be recognized belongs;

constructing a domain keyword network based on the domain keyword in the domain keyword set in the scenario to which the speech to be recognized belongs; and

inserting the domain keyword network into the sentence pattern decoding network to obtain the speech recognition decoding network.

12. The method according to claim 11, wherein the constructing a domain keyword network based on the domain keyword in the domain keyword set in the scenario to which the speech to be recognized belongs comprises:

constructing a word-level domain keyword network based on the domain keyword in the domain keyword set in the scenario to which the speech to be recognized belongs; and

replacing a word in the word-level domain keyword network with a corresponding pronunciation and expanding a pronunciation node based on the corresponding pronunciation of the word, to obtain a pronunciation-level domain keyword network.

13. The method according to claim 11, wherein the domain keyword network and the sentence pattern decoding network each comprises nodes and directed arcs connecting the node, and the directed arc between the nodes stores pronunciation information or a placeholder, wherein

the inserting the domain keyword network into the sentence pattern decoding network to obtain the speech recognition decoding network comprises:

constructing the speech recognition decoding network by connecting the domain keyword network with a left node and a right node of the replaceable grammar slot of the sentence pattern decoding network through the directed arcs.

14. The method according to claim 13, wherein a unique identifier corresponding to a keyword in the domain keyword network is stored on a first arc and a last arc of the keyword, and

storing the unique identifier of the keyword and the numbers of left and right nodes of the directed arc where the unique identifier is located in the sentence pattern decoding network in a network-in keyword information set, in a case that the keyword in the domain keyword network is inserted into the sentence pattern decoding network, wherein the network-in keyword information set stores the unique identifier of the keyword that is inserted into the sentence pattern decoding network, and the numbers of the left and right nodes of the directed arc where the unique identifier is located in the sentence pattern decoding network.

15. The method according to claim 14, further comprising:

traversing each unique identifier in the network-in keyword information set; and

disconnecting the directed arc between the left and right nodes corresponding to the unique identifier, in a case that the unique identifier traversed is not a unique identifier of a keyword in the domain keyword set in the scenario to which the speech to be recognized belongs.

16. The method according to any one of claims 3 to 9, further comprising:

correcting a non-domain keyword content in the first speech recognition result based on a reference text content in the second speech recognition result to obtain a corrected first speech recognition result; wherein the reference text content is a text content in the second speech recognition result that matches the non-domain keyword content in the first speech recognition result.

17. The method according to claim 16, wherein the correcting a non-domain keyword content in the first speech recognition result based on a reference text content in the second speech recognition result to obtain a corrected first speech recognition result comprises:

   determining the domain keyword content and the non-domain keyword content from the first speech recognition result, and determining a text content corresponding to the non-domain keyword content in the first speech recognition result from the second speech recognition result as the reference text content;
   determining a corrected non-domain keyword content based on the reference text content in the second speech recognition result and the non-domain keyword content in the first speech recognition result; and
   combining the corrected non-domain keyword content with the domain keyword content to obtain the corrected first speech recognition result.

18. The method according to claim 17, wherein the determining the text content corresponding to the non-domain keyword content in the first speech recognition result from the second speech recognition result as the reference text content comprises:

   determining an edit distance matrix between the first speech recognition result and the second speech recognition result based on an edit distance algorithm; and
   determining the text content corresponding to the non-domain keyword content in the first speech recognition result from the second speech recognition result as the reference text content, based on the edit distance matrix and the non-domain keyword content in the first speech recognition result.

19. The method according to claim 17, wherein the determining a corrected non-domain keyword content based on the reference text content in the second speech recognition result and the non-domain keyword content in the first speech recognition result comprises:

   determining whether the reference text content in the second speech recognition result is the same as the non-domain keyword content in the first speech recognition result;
   determining a target text content in the second speech recognition result as the corrected non-domain keyword content, in a case that the reference text content in the second speech recognition result is the same as the non-domain keyword content in the first speech recognition result;
   determining, in a case that the reference text content in the second speech recognition result is different from the non-domain keyword content in the first speech recognition result, whether a number of characters of the second speech recognition result is greater than that of the non-domain keyword content in the first speech recognition result, and whether a difference in the number of characters between the second speech recognition result and the non-domain keyword content in the first speech recognition result is less than or equal to a set threshold;
   determining the target text content in the second speech recognition result as the corrected non-domain keyword content, in a case that the number of characters of the second speech recognition result is greater than that of the non-domain keyword in the first speech recognition result and the difference in the number of characters between the second speech recognition result and the non-domain keyword content in the first speech recognition result is less than or equal to a set threshold; and
   determining the non-domain keyword content in the first speech recognition as the corrected non-domain keyword content, in a case that the number of characters of the second speech recognition result is less than that of the non-domain keyword content of the first speech recognition result, and/or the difference in the number of characters between the second speech recognition result and the non-domain keyword content in the first speech recognition result is greater than the set threshold, wherein
   the target text content in the second speech recognition result is a text content in the second speech recognition result that corresponds to a position of the non-domain keyword content in the first speech recognition result.

20. The method according to claim 3, wherein the determining a final speech recognition result at least from the first speech recognition result and the second speech recognition result comprises:

determining whether a confidence level of the first speech recognition result is greater than a preset confidence level threshold;

determining the final speech recognition result from the first speech recognition result and the second speech recognition result based on an acoustic score of the first speech recognition result and an acoustic score of the second speech recognition result, in a case that the confidence level of the first speech recognition result is greater than the preset confidence level threshold; and

performing an acoustic score incentive on the first speech recognition result in a case that the confidence level of the first speech recognition result is less than or equal to the preset confidence level threshold, and determining the final speech recognition result from the first speech recognition result and the second speech recognition result based on the acoustic score of the first speech recognition result after the acoustic score incentive and the acoustic score of the second speech recognition result.

21. The method according to claim 7 or 20, comprising:
determining both the first speech recognition result and the second speech recognition result as the final speech recognition result in a case that the acoustic score of the first speech recognition result is the same as the acoustic score of the second speech recognition result.

22. The method according to any one of claims 4, 6 and 20, wherein the performing an acoustic score incentive on the first speech recognition result comprises:

determining an acoustic incentive coefficient at least based on the domain keyword content and the non-domain keyword content in the first speech recognition result;
updating the acoustic score of the domain keyword content in the first speech recognition result based on the acoustic incentive coefficient; and
recalculating the acoustic score of the first speech recognition result based on an updated acoustic score of the domain keyword content in the first speech recognition result and the acoustic score of the non-domain keyword content in the first speech recognition result.

23. The method according to any one of claims 5, 6, and 9, wherein the performing a language model incentive on the third speech recognition result comprises:

expanding a path of the third speech recognition result based on the domain keyword set in the scenario to which the speech to be recognized belongs and a category label corresponding to the scenario, wherein the category label is obtained by clustering speech recognition scenarios;
determining a language model score of the third speech recognition result and a language model score of an expanded path in the third speech recognition result based on a recognition result of a clustering language model corresponding to the category label on a training corpus, wherein the clustering language model is obtained by performing speech recognition training on a target corpus, and a domain keyword in the target corpus is replaced with the category label; and
determining a language score of the third speech recognition result after the language model incentive based on the language model score of the third speech recognition result and the language model score of the expanded path of the third speech recognition result.

24. The method according to claim 23, wherein the expanding a path of the third speech recognition result based on the domain keyword set in the scenario to which the speech to be recognized belongs and a category label corresponding to the scenario comprises:

comparing the domain keyword in the third speech recognition result with each domain keyword in the domain keyword set in the scenario to which the speech to be recognized belongs; and
expanding a new path between the left and right nodes of the slot where the domain keyword is located in the third speech recognition result in a case that the domain keyword in the third speech recognition result matches the domain keyword in the domain keyword set, and storing the category label corresponding to the scenario to which the speech to be recognized belongs on the new path.

25. A speech recognition apparatus, comprising:

an acoustic recognition unit, configured to obtain an acoustic state sequence of a speech to be recognized;
a network construction unit, configured to construct a speech recognition decoding network based on a domain keyword set and a sentence pattern decoding network that are in a scenario to which the speech to be recognized belongs, wherein the sentence pattern decoding network is constructed by at least performing sentence pattern induction on a text corpus in the scenario to which the speech to be recognized belongs; and

a decoding unit, configured to decode the acoustic state sequence based on the speech recognition decoding network to obtain a speech recognition result.

26. A speech recognition apparatus, comprising:

an acoustic recognition unit, configured to obtain an acoustic state sequence of a speech to be recognized;

a multi-dimensional decoding unit, configured to decode the acoustic state sequence by a speech recognition decoding network to obtain a first speech recognition result, and decode the acoustic state sequence by a general speech recognition model to obtain a second speech recognition result, wherein the speech recognition decoding network is constructed based on a domain keyword set and a sentence pattern decoding network that are in a scenario to which the speech to be recognized belongs;

an acoustic incentive unit, configured to perform an acoustic score incentive on the first speech recognition result; and

a decision unit, configured to determine a final speech recognition result at least from the first speech recognition result after the acoustic score incentive and the second speech recognition result.

27. A speech recognition device, comprising:

a memory and a processor; wherein

the memory is connected to the processor and is configured to store a program; and

the processor is configured to execute the program stored in the memory to implement the speech recognition method according to any one of claims 1 to 24.

28. A storage medium, comprising a computer program stored thereon, wherein the computer program, when executed by a processor, implements the speech recognition method according to any one of claims 1 to 24.

| Obtain an acoustic state sequence of a speech to be recognized | S101 |

| Construct a speech recognition decoding network based on a domain keyword set and a sentence pattern decoding network in a scenario to which the speech to be recognized belongs | S102 |

| Decode the acoustic state sequence by the speech recognition decoding network to obtain a speech recognition result | S103 |

**Figure 1**

**Figure 2**

Obtain an acoustic state sequence of a speech to be recognized — S301

Construct a speech recognition decoding network based on a domain keyword set and a sentence pattern decoding network in a scenario to which the speech to be recognized belongs — S302

Decode the acoustic state sequence by a general speech recognition model to obtain a second speech recognition result — S304

Decode the acoustic state sequence by the speech recognition decoding network to obtain a first speech recognition result — S303

Determine a final speech recognition result at least from the first speech recognition result and the second speech recognition result — S305

**Figure 3**

Obtain an acoustic state sequence of a speech to be recognized — S401

Construct a speech recognition decoding network based on a domain keyword set and a sentence pattern decoding network in a scenario to which the speech to be recognized belongs — S402

Decode the acoustic state sequence by a general speech recognition model to obtain a second speech recognition result — S404

Decode the acoustic state sequence by a pre-trained scenario customization model to obtain a third speech recognition result — S405

Decode the acoustic state sequence by the speech recognition decoding network to obtain a first speech recognition result — S403

Determine a final speech recognition result at least from the first speech recognition result and the second speech recognition result — S406

**Figure 4**

Obtain an acoustic state sequence of a speech to be recognized — S501

Decode the acoustic state sequence by a speech recognition decoding network to obtain a first speech recognition result — S502

Decode the acoustic state sequence by a general speech recognition model to obtain a second speech recognition result — S503

Perform an acoustic score incentive on the first speech recognition result — S504

Determine a final speech recognition result at least from the first speech recognition result after the acoustic score incentive and the second speech recognition result — S505

**Figure 5**

Obtain an acoustic state sequence of a speech to be recognized ⌐ S601

Decode the acoustic state sequence by a speech recognition decoding network to obtain a first speech recognition result ⌐ S602

Decode the acoustic state sequence by a general speech recognition model to obtain a second speech recognition result ⌐ S603

Decode the acoustic state sequence by a pre-trained scenario customization model to obtain a third speech recognition result ⌐ S604

Perform an acoustic score incentive on the first speech recognition result ⌐ S605

Determine the final speech recognition result from the first speech recognition result after the acoustic score incentive, the second speech recognition result and the third speech recognition result ⌐ S606

**Figure 6**

**Figure 7**

Figure 8

Figure 9

**Figure 10**

EP 4 425 484 A1

EP 4 425 484 A1

First speech recognition result

Second speech recognition result

Character string before a personal name

Character string of a personal name

Character string after a personal name

Edit distance matrix

Calculate a local maximum subsequence

Calculate a local maximum subsequence

Whether the maximum subsequence is a character string before a personal name

Yes

No

Whether the maximum subsequence is a character string after a personal name

Yes

No

Whether the second speech recognition result has more characters than the character string before a personal name

No

Yes

Whether the second speech recognition result has more characters than the character string after a personal name

No

Yes

Whether a difference of the number of characters therebetween is more than a threshold

No

Yes

Whether a difference of the number of characters therebetween is more than a threshold

No

Yes

Determine the character string before a personal name in the first speech recognition result as a corrected character string before a personal name

Determine a target text content in the second speech recognition result as a corrected character string before a personal name

Determine the character string after a personal name in the first speech recognition result as a corrected character string after a personal name

Determine a target text content in the second speech recognition result as a corrected character string after a personal name

The corrected character string before a personal name

The corrected character string after a personal name

First speech recognition result

**Figure 11**

First speech recognition result

Second speech recognition result

Calculate a matching degree

Whether the matching degree is greater than a set matching degree threshold

No

Yes

Decode again with the decoding network constructed based on the domain keyword content in the first speech recognition result and the second speech recognition result

Calculate a confidence level of the first speech recognition result

Whether the confidence level is greater than a preset confidence level threshold

Yes

No

Perform an acoustic score incentive on the first speech recognition result

Determine the final speech recognition result from the first speech recognition result and the second speech recognition result, according to an acoustic score of the first speech recognition result and an acoustic score of the second speech recognition result

**Figure 12**

**Figure 13**

EP 4 425 484 A1

**Figure 14**

Speech recognition apparatus

Acoustic recognition unit

Network construction unit

Decoding unit

001

002

003

**Figure 15**

Speech recognition apparatus

Acoustic recognition unit

Multi-dimensional decoding unit

Acoustic incentive unit

Decision unit

011

012

013

014

**Figure 16**

**Figure 17**

## INTERNATIONAL SEARCH REPORT

| International application No. |
| --- |
| **PCT/CN2021/133434** |

**A. CLASSIFICATION OF SUBJECT MATTER**

G10L 15/193(2013.01)i

According to International Patent Classification (IPC) or to both national classification and IPC

**B. FIELDS SEARCHED**

Minimum documentation searched (classification system followed by classification symbols)

G10L

Documentation searched other than minimum documentation to the extent that such documents are included in the fields searched

Electronic data base consulted during the international search (name of data base and, where practicable, search terms used)

WPI, EPODOC, CNPAT, CNKI: 语音, 识别, 检测, 模型, 网络, 解码, 垂类, 关键字, 场景, 句式, 编码, 语料, 序列, 文本, word, sequence, network, voice, scene, model, string, vertical, class, vector, decode

**C. DOCUMENTS CONSIDERED TO BE RELEVANT**

| Category* | Citation of document, with indication, where appropriate, of the relevant passages | Relevant to claim No. |
| --- | --- | --- |
| Y | CN 105845133 A (LETV HOLDINGS (BEIJING) CO., LTD. et al.) 10 August 2016 (2016-08-10) description, paragraphs [0027]-[0060] and [0083]-[0085] | 1-5, 7-9, 11-13, 21-22, 25-28 |
| Y | CN 113515945 A (IFLYTEK CO., LTD.) 19 October 2021 (2021-10-19) description, paragraphs [0063]-[0129] | 1-5, 7-9, 11-13, 21-22, 25-28 |
| A | CN 107808662 A (ALIBABA GROUP HOLDING LIMITED) 16 March 2018 (2018-03-16) entire document | 1-28 |
| A | US 2015340034 A1 (GOOGLE INC.) 26 November 2015 (2015-11-26) entire document | 1-28 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 July 2022** | **27 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/133434**

| Patent document cited in search report | | | Publication date (day/month/year) | Patent family member(s) | | | Publication date (day/month/year) |
|---|---|---|---|---|---|---|---|
| CN | 105845133 | A | 10 August 2016 | WO | 2017166631 | A1 | 05 October 2017 |
| CN | 113515945 | A | 19 October 2021 | None | | | |
| CN | 107808662 | A | 16 March 2018 | None | | | |
| US | 2015340034 | A1 | 26 November 2015 | None | | | |

Form PCT/ISA/210 (patent family annex) (January 2015)

**REFERENCES CITED IN THE DESCRIPTION**

**Patent documents cited in the description**

- CN 202111274880